(19) Europäisches Patentamt
European Patent Office
Office européen des brevets

(11) **EP 3 245 651 B1**

(12) **EUROPÄISCHE PATENTSCHRIFT**

(45) Veröffentlichungstag und Bekanntmachung des Hinweises auf die Patenterteilung:
**03.10.2018   Patentblatt 2018/40**

(21) Anmeldenummer: **16790574.4**

(22) Anmeldetag: **31.10.2016**

(51) Int Cl.:
***G10K 11/178*** (2006.01)

(86) Internationale Anmeldenummer:
**PCT/EP2016/076249**

(87) Internationale Veröffentlichungsnummer:
**WO 2017/174166 (12.10.2017 Gazette 2017/41)**

(54) **SYSTEM UND VERFAHREN ZUR AKTIVEN SCHALLBEEINFLUSSUNG**

SYSTEM AND METHOD FOR INFLUENCING SOUND IN AN ACTIVE MANNER

SYSTÈME ET PROCÉDÉ D'INFLUENCE SONORE ACTIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.04.2016   DE 102016106325**
**06.04.2016   DE 102016106326**

(43) Veröffentlichungstag der Anmeldung:
**22.11.2017   Patentblatt 2017/47**

(73) Patentinhaber: **Eberspächer Exhaust Technology GmbH & Co. KG**
**66539 Neunkirchen (DE)**

(72) Erfinder: **BUGANZA, Federico**
**73730 Esslingen (DE)**

(74) Vertreter: **Diehl & Partner GbR**
**Patentanwälte**
**Erika-Mann-Strasse 9**
**80636 München (DE)**

(56) Entgegenhaltungen:
**US-A1- 2005 024 134     US-A1- 2005 207 585**

• **KUO S M ET AL: "ACTIVE NOISE CONTROL: A TUTORIAL REVIEW", PROCEEDINGS OF THE IEEE, IEEE. NEW YORK, US, Bd. 87, Nr. 6, 1. Juni 1999 (1999-06-01), Seiten 943-973, XP011044219, ISSN: 0018-9219, DOI: 10.1109/5.763310**

**Beschreibung**

Die vorliegende Erfindung betrifft ein System und ein Verfahren zur aktiven Schallbeeinflussung. Der zu beeinflussende Schall kann dabei beispielsweise in einer Abgasanlage oder einer Ansauganlage einer Verbrennungskraftmaschine eines Fahrzeugs geführt werden. Dann stellt die Verbrennungskraftmaschine die Geräuschquelle des zu beeinflussenden Schalls dar.

Abgasanlagen für Verbrennungskraftmaschinen sind herkömmlich aus passiven Komponenten aufgebaut, die in allen Betriebssituationen insgesamt von Abgas durchströmt werden und zusammen die Abgasanlage bilden. Bei diesen Komponenten kann es sich neben einem oder mehreren Leitungsstücken beispielsweise um einen oder mehrere Turbolader, einen oder mehrere Katalysatoren und/oder einen oder mehrere Schalldämpfer handeln. Ansauganlagen für Verbrennungskraftmaschinen werden entsprechend in allen Betriebssituationen von Luft durchströmt und weisen üblicherweise einen oder mehrere Filter, Ventile und Verdichter auf.

In jüngerer Zeit wurde begonnen, Abgasanlagen und Ansauganlagen um Systeme zur aktiven Beeinflussung von in der Abgasanlage bzw. Ansauganlage geführtem, auf den Betrieb einer Verbrennungskraftmaschine zurückzuführendem Geräusch zu ergänzen. Derartige Systeme überlagern das in der Abgasanlage bzw. Ansauganlage geführte, wesentlich durch die Verbrennungskraftmaschine erzeugte Geräusch mit künstlich erzeugten Schallwellen, welche das in der Abgasanlage bzw. Ansauganlage geführte Geräusch dämpfen oder verändern. Im Ergebnis soll ein nach außerhalb der Abgasanlage bzw. Ansauganlage abgegebener Schall zum Image eines jeweiligen Herstellers passen, Kunden ansprechen und gesetzliche Grenzwerte einhalten.

Dies erfolgt dadurch, dass wenigstens ein Schallerzeuger vorgesehen ist, der mit der Abgasanlage bzw. Ansauganlage in Fluidverbindung steht und so Schall in das Innere der Abgasanlage bzw. Ansauganlage einstrahlt. Dieser künstlich erzeugte Schall und der von der Verbrennungskraftmaschine erzeugte Schall überlagern sich und treten gemeinsam aus der Abgasanlage bzw. Ansauganlage aus. Derartige Systeme können auch zur Schalldämpfung eingesetzt werden. Zum Erzielen einer vollständigen destruktiven Interferenz der Schallwellen des in der Abgasanlage bzw. Ansauganlage geführten Geräuschs und des vom Schallerzeuger erzeugten Schalls müssen die vom Lautsprecher herrührenden Schallwellen nach Amplitude und Frequenz den in der Abgasanlage bzw. Ansauganlage geführten Schallwellen entsprechen, relativ zu diesen jedoch eine Phasenverschiebung von 180 Grad aufweisen. Entsprechen sich die in der Abgasanlage bzw. Ansauganlage geführten Schallwellen, welche auf den Betrieb der Verbrennungskraftmaschine zurückzuführen sind, und die vom Lautsprecher erzeugten Schallwellen zwar in der Frequenz und weisen sie relativ zueinander eine Phasenverschiebung von 180 Grad auf, entsprechen sich die Schallwellen aber nicht in der Amplitude, kommt es nur zu einer Abschwächung des aus der Abgasanlage bzw. Ansauganlage ausgegebenen Geräuschs.

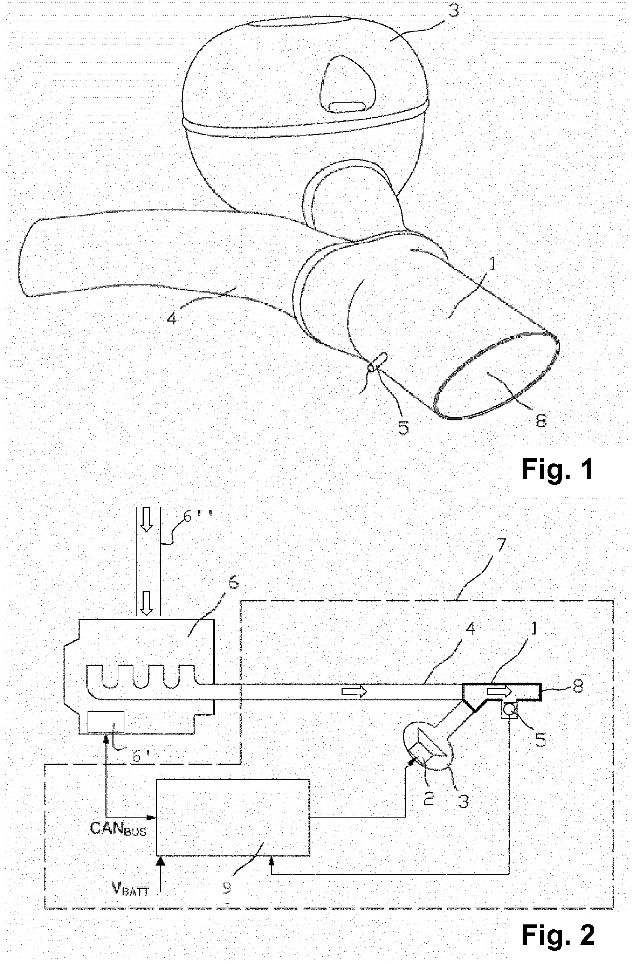

Eine Abgasanlage mit einem System zur aktiven Beeinflussung von in der Abgasanlage geführtem Schall aus dem Stand der Technik wird nachfolgend unter Bezugnahme auf die Figuren 1 und 2 beschrieben:

Eine Abgasanlage 4 mit einem System 7 zur aktiven Beeinflussung von in der Abgasanlage 4 geführtem Schall weist einen Schallerzeuger 3 in Form eines schallisolierten Gehäuses auf, welches einen Lautsprecher 2 enthält und im Bereich eines Endrohrs 1 über eine Schallleitung an die Abgasanlage 4 angebunden ist. Das Endrohr 1 weist eine Mündung 8 auf, welche in der Abgasanlage 4 geführtes Abgas und in der Abgasanlage 4 geführten Luftschall nach außen abgibt. An dem Endrohr 1 ist ein Fehlermikrofon 5 vorgesehen. Das Fehlermikrofon 5 misst Schall im Inneren des Endrohrs 1. Diese Messung mittels des Fehlermikrofons 5 erfolgt in einem Abschnitt stromabwärts eines Bereichs, in dem die Schallleitung in die Abgasanlage 4 mündet und damit die fluide Anbindung zwischen Abgasanlage 4 und Schallerzeuger 3 bereitgestellt wird. Dabei ist der Begriff "stromabwärts" auf die Strömungsrichtung des Abgases im Endrohr 1 der Abgasanlage 4 bezogen. Die Strömungsrichtung des Abgases ist in Figur 2 durch Pfeile gekennzeichnet. Zwischen dem Bereich der fluiden Anbindung zwischen Abgasanlage 4 und Schallerzeuger 3 und der Verbrennungskraftmaschine 6 können weitere Komponenten der Abgasanlage 4, wie beispielsweise ein Katalysator und ein Schalldämpfer, vorgesehen sein (nicht gezeigt). Der Lautsprecher 2 und das Fehlermikrofon 5 sind jeweils mit einer Regelung 9 verbunden. Weiter ist die Regelung 9 über einen CAN-Bus mit einer Motorsteuerung 6' einer Verbrennungskraftmaschine 6 verbunden. Die Verbrennungskraftmaschine 6 weist weiter eine Ansauganlage 6" auf. Anhand von durch das Fehlermikrofon 5 gemessenem Schall und von über den CAN-Bus empfangenen Betriebsparametern der Verbrennungskraftmaschine 6 berechnet die Regelung 9 für den Lautsprecher 2 ein Signal, welches bei Überlagerung mit dem im Inneren des Endrohrs 1 der Abgasanlage 4 geführten Schall ein angestrebtes Gesamtgeräusch erzeugt, und gibt dieses an den Lautsprecher 2 aus. Dabei kann die Regelung beispielsweise einen Filtered-x Least mean squares (FxLMS) Algorithmus verwenden, und versuchen, ein mittels des Fehlermikrofons gemessenes Rückkoppelsignal/Fehlersignal durch Ausgabe von Schall über den Lautsprecher auf Null (im Falle der Schallauslöschung) oder einen vorgegebenen Schwellwert (im Falle der Schallbeeinflussung) zu regeln. Statt eines CAN-Bus kann auch ein anderes BusSystem verwendet werden.

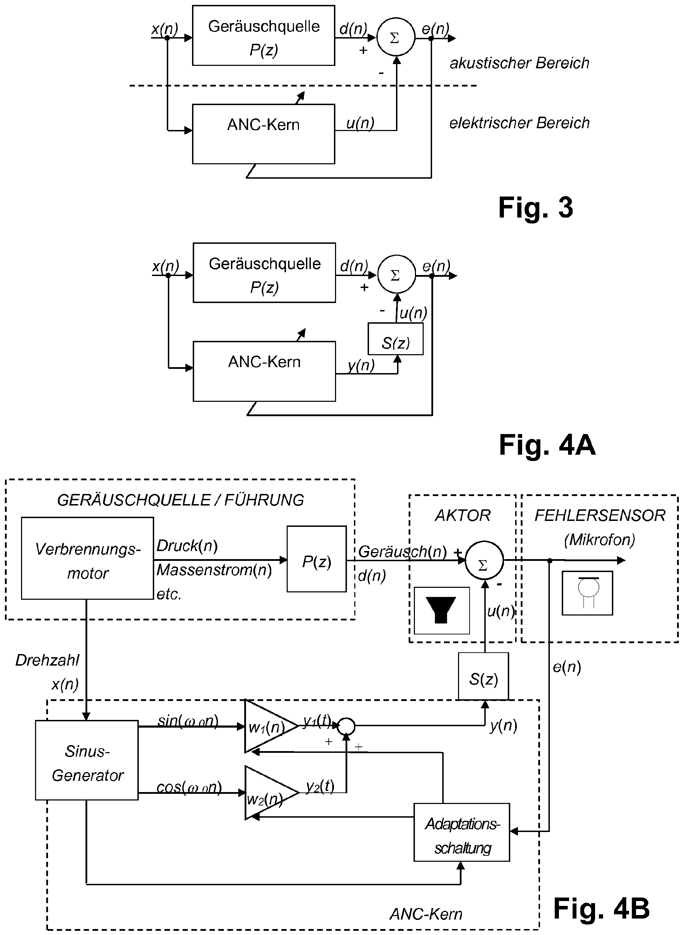

Die Arbeitsweise der Regelung wird nachfolgend unter Bezugnahme auf die Figuren 3 bis 5 am Beispiel einer Antischall-Regelung (ANC (active noise cancellation)-Regelung) näher erläutert.

Viele Geräusche, welche durch Maschinen wie beispielsweise Verbrennungskraftmaschinen, Kompressoren oder Propeller hervorgerufen werden, weisen periodische Komponenten auf. Dies erlaubt es durch Überwachung der jeweiligen Maschine mit einem geeigneten Sensor (z. B. Drehzahlmesser), einen zeitabhängigen Eingangswellenvektor *x(n)* bereit zu stellen, welcher eine Abhängigkeit von der Grundfrequenz und den Harmonischen des von der Maschine überwiegend erzeugten Geräuschs aufweist. In diese Abhängigkeit können beispielsweise Abgasgegendruck, Massenstrom des Abgases, Temperatur des Abgases etc. einfließen. Viele Maschinen erzeugen Geräusche von unterschiedlichen Grundfrequenzen; diese werden häufig als Motorordnungen bezeichnet.

Dieser zeitabhängige Eingangswellenvektor hat, wie in Figur 3 dargestellt, einen Einfluss auf das von der Geräuschquelle gemäß einer zunächst unbekannten z-transformierten Übertragungsfunktion der Geräuschquelle *P(z)* erzeugte Signal (entspricht dem erzeugten Geräusch) *d(n)* und wird von dem Steueralgorithmus eines Systems zur aktiven Beeinflussung von Schall (in den Figuren 3, 4A, 4B und 6A als "ANC-Kern" bezeichnet) zur Erzeugung eines einem Signal *u(n)* entsprechenden Schalls verwendet, welcher bei Überlagerung mit dem dem Signal *d(n)* entsprechenden Schall zu einem gewünschten, dem Rückkoppelsignal *e(n)* entsprechenden Geräusch führt. Das Signal *u(n)* entspricht (innerhalb des Betriebsbereichs) dem Schalldruck eines Schallerzeugers, welcher den zu überlagernden Schall erzeugt. Die Übertragungsfunktion *P(z)* kann empirisch bestimmt werden.

Die Überlagerung ist in Figur 3 durch das Summenzeichen $\Sigma$ symbolisiert und findet im akustischen Bereich (z. B. einer Abgasleitung) statt. Das sich aus der Überlagerung ergebende Rückkoppelsignal *e(n)* wird beispielsweise mittels eines Fehlermikrofons erfasst und dem Steueralgorithmus (ANC-Kern) als Rückkoppelsignal zurückgeführt.

$$e(n) = d(n) - u(n)$$

Das Rückkoppelsignal *e(n)* entspricht somit einem Schalldruck des überlagerten Geräuschs.

In Figur 3 ist *P(z)* die Z-Transformierte der Übertragungsfunktion der Geräuschquelle. Diese Übertragungsfunktion *P(z)* kann neben der Grundgröße der das Geräusch erzeugenden Maschine (im vorliegenden Fall ein die Drehzahl repräsentierender, zeitabhängiger Eingangswellenvektor *x(n)*) von zahlreichen physikalischen Parametern wie beispielsweise Druck, Massendurchsatz und Temperatur des schallführenden Systems abhängen. In der Folge ist die Übertragungsfunktion *P(z)* in der Regel nicht genau bekannt und wird häufig empirisch bestimmt.

Es ist bekannt, dass das in Figur 3 gezeigte Modell der ANC-Regelung Unzulänglichkeiten aufweist, da das sich aus der Überlagerung des von der Geräuschquelle anhand der Übertragungsfunktion *P(z)* erzeugte Signal *d(n)* mit dem vom Schallerzeuger entsprechend dem Signal *u(n)* erzeugtem Schall ergebende Rückkoppelsignal *e(n),* welches dem Steueralgorithmus zurückgeführt wird, Komponenten enthält, die nicht auf die Übertragungsfunktion P(z) der Geräuschquelle zurückzuführen sind.

In der Folge wurde das Modell der ANC-Regelung um eine zweite Übertragungsfunktion *S(z)* erweitert, wie es in Figuren 4A, 4B gezeigt ist.

Diese zweite Übertragungsfunktion *S(z)* berücksichtigt zum einen Unzulänglichkeiten der im elektrischen Bereich verwendeten Digital-Analog (D/A) Umsetzer, Filter, Verstärker, Schallerzeuger, etc. aber auch des im akustischen Bereichs von der ersten Übertragungsfunktion *P(z)* noch nicht berücksichtigten Pfades vom Ort der Schallerzeugung/Schallüberlagerung zum Ort eines das Rückkoppelsignal *e(n)* bestimmenden Fehlermikrofons und schließlich Unzulänglichkeiten des sich im elektrischen Bereich hieran anschließenden Fehlermikrofons, Vorverstärkers, Anti-Aliasing Filters und Analog-Digital (A/D) Umsetzers etc..

In Erweiterung des Modells aus Figur 3 berücksichtigt das in dem Modell von Figur 4A, 4B von dem ANC-Kern ausgegebene Signal *y(n)* daher die zweite Übertragungsfunktion S(z), welche die Umsetzung des vom ANC-Kern ausgegebenen Signals *y(n)* in das Signal *u(n)* angibt. Dabei entspricht *u(n)* der (in mathematischer Weise idealisierten) Amplitude des vom Schallerzeuger erzeugten Signals.

Dabei berücksichtigt die zweite Übertragungsfunktion *S(z)* den gesamten Bereich von dem Ausgang der Regelung (*y(n)*) bis zum Rückkoppelsignal (*e(n)*) der Regelung.

Wenn durch die Geräuschquelle Geräusche erzeugt werden (d. h. die Geräuschquelle eingeschaltet ist), ergibt sich die zweite Übertragungsfunktion *S(z)* zu

$$S(z) = u(z) / y(z)$$

und entspricht *u(n)* der Faltung (Konvolution) der Signale *s(n)* und *y(n)*

$$u(n) = conv[s(n),y(n)],$$

wobei *s(n)* die Impulsantwort der zweiten Übertragungsfunktion *S(z)* ist. *e(z), y(z)* und *u(z)* sind jeweils die Z-Transformierten der Signale *e(n), y(n)* und *u(n)*.

Figur 4B zeigt das Modell aus Figur 4A in größerer Detailtreue. Ersichtlich wird das von dem ANC-Kern ausgegebene Signal *y(n)* aus zwei von einem Sinusgenerator bereitgestellten, relativ zueinander um 90° verschobenen Sinusschwingungen $\sin(\omega_0 n)$, $\cos(\omega_0 n)$ zusammengesetzt, welche mittels zweier Verstärker zuvor um unterschiedliche Verstärkungsfaktoren $w_1(n)$, $w_2(n)$ verstärkt worden sind, um zwei relativ zueinander um 90° verschobene Signale $y_1(n)$, $y_2(n)$ mit unterschiedlichen Amplituden zu erzeugen. Die Verstärkung der beiden Verstärker wird dabei von einer Adaptionsschaltung dynamisch in Abhängigkeit von dem Rückkoppelsignal *e(n)* entsprechend angepasst.

Soll beispielsweise für eine gewisse Drehzahl RPM der Verbrennungskraftmaschine die i-te Motorordnung $EO_i$ ausgelöscht werden, ergibt sich die auszulöschende Grundfrequenz $f_0$ zu

$$f_0 = EO_i \cdot RPM/60.$$

$$\omega_0 = 2\ \pi f_0$$

Die in Figur 4B zur Anpassung der Verstärkung verwendete Adaptionsschaltung wird mit einer Taktfrequenz betrieben, welche die Taktfrequenz des ANC-Kerns festgelegt.

In Figur 5 ist schematisch der Spektralverlauf der Amplitude (*Magn*) des Geräuschs (*Geräusch(n)*) über die Frequenz (*Freq*) gezeigt. Dabei gibt *d(n)* den aktuellen Schalldruck bei der gegebenen Grundfrequenz $f_0$ in Pascal an. $\|d(f)\|$ gibt dabei für Harmonische den Betrag der Amplitude zu einem bestimmten Zeitpunkt an.

Der Eingangswellenvektor *x(n)* der ANC-Regelung wird dabei so definiert (Vektoren sind **fett** gedruckt):

$$\boldsymbol{x}(n) = [sin(\omega_0\ n),\ cos(\omega_0\ n)]$$

In dem Aufsatz "Active Noise Control: A tutorial review" von Sen M. Kuo und Dennis R. Morgan, erschienen in den Proceedings of the IEEE, Vol. 87, No. 6, Juni 1999 wurde nachgewiesen, dass die ANC-Regelung nach einer Einschwingzeit das Rückkoppelsignal *e(n)* minimiert. Auf den Inhalt dieses Aufsatzes, der die Kombination der Merkmale des Oberbegriffs von Anspruch 1 offenbart, wird vollumfänglich und insbesondere im Hinblick auf die dort beschriebene Narrowband-Feedforward-Regelung Bezug genommen.

$$y(n) = \boldsymbol{x}(n)\ \boldsymbol{w}^T(n) = \boldsymbol{w}(n)\ \boldsymbol{x}^T(n) = w_1(n)\ sin(\omega_0\ n) + w_2(n)\ cos(\omega_0\ n)$$

Dabei bezeichnet $\boldsymbol{x}^T(n)$ die Transponierte des Eingangswellenvektors *x(n)*, und ergibt sich aus einer Vertauschung der Spalten und Zeilen des Eingangswellenvektors *x(n)*. Dabei wird der aus den Verstärkungsfaktoren gebildete Vektor *w(n)* = [$w_1(n)$, $w_2(n)$] als Phasor-Vektor der ANC-Regelung bezeichnet.

Wie in Figur 4B gezeigt, wird die Verstärkung der Sinuswellen mittels des Phasor-Vektors **w**(n) jeweils durch eine Adaption angepasst.

$$\boldsymbol{w}(n+1) = \boldsymbol{w}(n) + \mu \cdot conv[s(n),\ \boldsymbol{x}(n)]\ e(n)$$

wobei $\mu$ die Anpassungsgeschwindigkeit angibt.

Da die Übertragungsfunktion *S(z)* dem ANC-Kern nicht für jeden Zeitpunkt bekannt ist, wird stattdessen eine Abschätzung $\hat{S}(z)$ verwendet, so dass die Anpassung zu

$$\boldsymbol{w}(n+1) = \boldsymbol{w}(n) + \mu \cdot conv[\hat{s}(n),\ \boldsymbol{x}(n)]\ e(n)$$

wird, wobei $\hat{s}(n)$ die Impulsantwort von $\hat{S}(z)$ ist.

Es wurde im Stand der Technik nachgewiesen, dass es unter den Annahmen, dass

a) das zu überlagernde Signal *d(n)* eine einfache Welle ist; und
b) der verwendete Aktor eine Amplitude $\|u(n)\| \geq \|d(n)\|$ bereitstellen kann möglich ist, den Mittelwert (*AVG*) von *e(n)* deutlich zu reduzieren:

$$AVG[e(n)_{FINAL}] \sim 0$$

Es wird betont, dass die vorstehenden Ausführungen nur beispielshaft sind, und die vorliegende Erfindung auch andere bekannte Möglichkeiten zur Erzeugung des vom ANC-Kern ausgegebenen Signal $y(n)$ einschließt.

Bei bekannten Systemen zur aktiven Schallbeeinflussung ist es nachteilig, dass in der Regel versucht wird, ein von der Geräuschquelle erzeugtes Geräusch weitgehend oder vollständig auszulöschen. Hieraus ergibt sich eine weitgehende Auslastung eines verwendeten Aktors, und damit ein sehr unregelmäßiger Verlauf des sich ergebenden Schalldruckpegels.

Es ist daher Aufgabe der vorliegenden Erfindung, ein System und ein Verfahren zur aktiven Schallbeeinflussung bereitzustellen, welches einen größeren Freiheitsgrad bei der Schallbeeinflussung bereitstellt. Gemäß einer Ausführungsform werden ein System und ein Verfahren zur aktiven Schallbeeinflussung bereitgestellt, welches es erlaubt, zu manipulierenden Schall so zu dämpfen oder zu verstärken, dass sich ein vorgebbarer Schalldruckpegel einstellt. Die vorstehende Aufgabe wird durch die Kombination der Merkmale der unabhängigen Ansprüche gelöst. Bevorzugte Weiterbildungen finden sich in den abhängigen Ansprüchen.

Ausführungsformen eines Systems zur aktiven Schallbeeinflussung weisen wenigstens je einen Schallerzeuger, einen Fehlersensor, einen Signalerzeuger, einen Regler, einen Addierer und einen Gewichter auf. Dabei ist der Schallerzeuger (welcher beispielsweise einen Lautsprecher aufweisen kann) dazu ausgebildet, bei Beaufschlagung mit einem Audiosignal Schall zu erzeugen und diesen mit einem zu manipulierenden Schall zu überlagern. Dieser vom Schallerzeuger erzeugte Schall wird häufig auch als "Antischall" bezeichnet. Der Fehlersensor (bei welchem es sich beispielsweise um ein Mikrofon oder einen Drucksensor handeln kann) ist dazu ausgebildet, überlagerten Schall, der sich aus der Überlagerung des von dem Schallerzeuger erzeugten Schalls mit dem zu manipulierendem Schall ergibt, zu messen und ein entsprechendes Rückkoppelsignal auszugeben. Der Signalerzeuger (bei dem es sich beispielsweise um ein Antischall-System aus dem Stand der Technik handeln kann) ist dazu ausgebildet, ein Schallsignal zu erzeugen und auszugeben. Der Regler (bei dem es sich beispielsweise um einen programmtechnisch eingerichteten Mikroprozessor handeln kann) ist dazu ausgebildet, ein erstes Regelsignal und ein zweites Regelsignal zu erzeugen. Der Addierer ist dazu ausgebildet, das zweite Regelsignal von dem Rückkoppelsignal zu subtrahieren, und das so erhaltene modifizierte Rückkoppelsignal an den Signalerzeuger auszugeben. Der Gewichter ist dazu ausgebildet, das von dem Signalerzeuger ausgegebene Schallsignal mit dem von dem Regler erzeugten ersten Regelsignal zu gewichten und das so gewichtete Schallsignal zur Erzeugung des Audiosignals auszugeben. Dabei ist der Signalerzeuger ausgebildet, das Schallsignal in Abhängigkeit von dem modifizierten Rückkoppelsignal zu erzeugen, und ist der Regler ausgebildet, das erste und zweite Regelsignal so zu erzeugen, dass ein Betrag der Amplituden des Rückkoppelsignals einem vorgebbaren Wert entspricht.

Der vorstehende Aufbau ermöglicht es, den zu manipulierenden Schall durch Überlagerung mit einem vom Schallerzeuger infolge des vom Signalerzeuger erzeugten und in Abhängigkeit vom ersten Regelsignal verstärkten bzw. herabgesetzten Schallsignal so zu erhöhen oder zu dämpfen, dass der sich ergebende überlagerte Schall einen über den vorgebbaren Wert einstellbaren und bei konstantem vorgebbarem Wert ebenfalls weitgehend konstanten Schalldruckpegel (Betrag seiner Amplituden) aufweist. Dies erlaubt es, gesetzliche Vorgaben genau einzuhalten. Dabei kann der vorgebbare Wert für eine jeweilige Grundfrequenz niedriger, höher oder gleich dem Betrag der Amplituden des Rückkoppelsignals bei ausgeschalteten System sein.

Gemäß einer Ausführungsform ist der Regler ausgebildet, das erste und zweite Regelsignal unter Verwendung eines Grund-Regelsignals zu erzeugen. Dabei repräsentiert das Grund-Regelsignal einen Wert einer Folge von rationalen Zahlen größer oder gleich Null. Dabei entspricht das Grund-Regelsignal einem Quotienten des vorgebbaren Werts mit einem Betrag der Amplituden des vom Schallerzeuger erzeugten Signals, sofern der Betrag der Amplituden des vom Schallerzeuger erzeugten Signals größer einem Schwellwert größer Null ist. Im anderen Fall, wenn der Betrag der Amplituden des vom Schallerzeuger erzeugten Signals kleiner oder gleich dem Schwellwert ist, entspricht das Grund-Regelsignal einem vorgegebenen Maximalwert. Ein derartiges Grund-Regelsignal kann auf einfache Weise erhalten werden. Da das zur Verstärkung bzw. Dämpfung des vom Signalerzeuger erzeugten Schallsignals verwendete erste Regelsignal und das zur Manipulation des Rückkoppelsignals verwendete zweite Regelsignal beide anhand des gemeinsamen Grund-Regelsignals gewonnen werden, ist eine Abstimmung zwischen dem ersten und dem zweiten Regelsignal besonders einfach sichergestellt. Dabei ist die vorstehende Unterscheidung bei der Erzeugung des Grund-Regelsignals erforderlich, um eine Division durch Null zu verhindern. Der Schwellwert kann somit ein beliebig kleiner positiver Wert ungleich Null sein.

Gemäß einer Ausführungsform ist dann der Regler dazu ausgebildet, das erste Regelsignal aus der Differenz von Eins und dem Grund-Regelsignal zu erzeugen.

Gemäß einer Ausführungsform ist dann der Regler dazu ausgebildet ist, das zweite Regelsignal aus dem Produkt des Grund-Regelsignals mit einem vom Schallerzeuger zu einem früheren Zeitpunkt erzeugten Signal zu erzeugen. Damit folgt das zweite Regelsignal (mit einer kleinen zeitlichen Verzögerung) dem zur Überlagerung mit dem zu manipulierenden Schall vom Schallerzeuger erzeugten Schall. Diese zeitliche Verzögerung ist erforderlich, da die vom Schallerzeuger erzeugten Signale indirekt vom zweiten Regelsignal abhängen und sich sonst eine algebraische Schleife ergeben würde.

Gemäß einer Ausführungsform liegen die früheren Zeitpunkte des von dem Schallerzeuger erzeugten Signals gegenüber dem Grund-Regelsignal um ein Einfaches oder Mehrfaches einer internen Taktfrequenz des Signalerzeugers und damit so kurz wie möglich zurück. Wegen des geringen zeitlichen Abstandes hält sich der bei der Erzeugung des zweiten Regelsignals eingebrachte Fehler in engen Grenzen.

Gemäß einer Ausführungsform berücksichtigt das vom Schallerzeuger erzeugte Signal eine Übertragungsfunktion des Schallerzeugers und beruht sonst auf dem vom Gewichter ausgegebenen gewichteten Schallsignal.

Gemäß einer Ausführungsform ist der Regler ausgebildet, das vom Schallerzeuger erzeugte Signal durch Faltung der Übertragungsfunktion des Schallerzeugers mit dem vom Gewichter ausgegebenen gewichteten Schallsignal zu ermitteln. Die Ermittlung des vom Schallerzeuger erzeugten Signals ist für die Berechnung des zweiten Regelsignals erforderlich. Eine Kenntnis der Übertragungsfunktion des Schallerzeugers ist auch für die Erzeugung des Schallsignals durch den Signalgenerator von Interesse.

Gemäß einer Ausführungsform ist dann der Regler ausgebildet, anstelle der Übertragungsfunktion des Schallerzeugers eine geschätzte Übertragungsfunktion zu verwenden, die im Regler abgelegt ist, um einen Schätzwert für das vom Schallerzeuger erzeugte Signal zu erhalten. Es ist sehr aufwändig, die Übertragungsfunktion des Schallerzeugers für jeden möglichen Betriebszustand zu bestimmen. Allerdings ist es durch Experimente möglich, die Übertragungsfunktion des Schallerzeugers für unterschiedliche Betriebszustände empirisch zu bestimmen und beispielsweise tabellarisch oder in Form einer Funktion im System abzulegen. Die geschätzte Übertragungsfunktion kann auch durch Bedatung vorgegeben sein.

Gemäß einer Ausführungsform ist der Signalerzeuger weiter ausgebildet, einen Eingangswellenvektor zu erhalten, welcher von dem zu manipulierenden Schall abhängt, und das Schallsignal in Abhängigkeit von dem Eingangswellenvektor zu erzeugen.

Dabei kann der Eingangswellenvektor repräsentativ sein für Drehzahl oder Motorlast oder Drehmoment eines Motors, der den zu manipulierenden Schall erzeugt. Zusätzlich oder alternativ kann der Eingangswellenvektor für eine Gaspedalstellung oder einen Gaspedalgradienten (Änderung der Gaspedalstellung pro Zeiteinheit) repräsentativ sein, wobei das Gaspedal einen Motor steuert, der den zu manipulierenden Schall erzeugt. Zusätzlich oder alternativ kann der Eingangswellenvektor repräsentativ sein für einen Zustand einer Kupplung oder eines Getriebes, welche mit einem Motor, der den zu manipulierenden Schall erzeugt, verbunden sind. Zusätzlich oder alternativ kann der Eingangswellenvektor für einen Betriebsmodus eines Motors, der den zu manipulierenden Schall erzeugt, repräsentativ sein (z. B. "sportlich" oder "sparsam"). Zusätzlich oder alternativ kann der Eingangswellenvektor repräsentativ sein für eine Spannung einer mit einem Motor, der den zu manipulierenden Schall erzeugt, verbundenen Batterie (da sich aus dieser Spannung häufig auf den Betriebszustand des Motors schließen lässt). Zusätzlich oder alternativ kann der Eingangswellenvektor für einen Betriebszustand eines Motors, der den zu manipulierenden Schall erzeugt, repräsentativ sein (z. B. Start des Motors wird vorbereitet/Zündung ist eingeschaltet, Motor wird gestartet, Motor läuft).

Dann kann das System gemäß einer Ausführungsform weiter ein Mikrofon aufweisen, welches den zu manipulierenden Schall misst und ein diesem entsprechendes Messsignal ausgibt, wobei der Signalerzeuger weiter ausgebildet ist, das Schallsignal unter Berücksichtigung des Messsignals zu erzeugen, welches durch das Mikrofon ausgeben wird. Alternativ oder zusätzlich kann das System dann gemäß einer Ausführungsform weiter eine Benutzerschnittstelle aufweisen, welche ausgebildet ist, eine Benutzereingabe zu empfangen, wobei der Signalerzeuger weiter ausgebildet ist, das Schallsignal unter Berücksichtigung der Benutzereingabe zu erzeugen, welche über die Benutzerschnittstelle empfangen wird. Alternativ oder zusätzlich kann dann gemäß einer Ausführungsform der Signalerzeuger mit einer Motorsteuerung eines Motors verbindbar und ausgebildet sein, das Schallsignal unter Berücksichtigung von Signalen zu erzeugen, welche von der Motorsteuerung empfangen werden.

Gemäß einer Ausführungsform ist der Signalerzeuger ausgebildet, das Schallsignal unter Verwendung eines Filtered-x Least mean squares (FxLMS) Algorithmus zu erzeugen.

Gemäß einer Ausführungsform ist der Signalerzeuger ausgebildet, das Schallsignal für jede Ordnung des zu manipulierenden Schalls (für jede Motorordnung, falls die Quelle des zu manipulierenden Schalls eine Verbrennungskraftmaschine ist) getrennt zu erzeugen.

Ausführungsformen eines Kraftfahrzeugs weisen eine Verbrennungskraftmaschine mit einer Motorsteuerung und das vorstehend beschriebene System auf. Dann ist die Motorsteuerung mit dem Signalerzeuger und/oder dem Regler verbunden und ausgebildet, eine Drehzahl und/oder eine Motorlast und/oder ein Drehmoment der Verbrennungskraftmaschine zu ermitteln und einen entsprechenden Eingangswellenvektor an den Signalerzeuger und/oder den Regler auszugeben.

Ausführungsformen eines Verfahrens zur aktiven Schallbeeinflussung weisen die folgenden Schritte auf: Erzeugen eines Schallsignals; Messen eines überlagerten Schalls, der sich aus der Überlagerung von in Abhängigkeit vom Schallsignal erzeugtem Schall mit einem zu manipulierendem Schall ergibt, um ein entsprechendes Rückkoppelsignal zu erhalten; Erzeugen eines Grund-Regelsignals, wobei das Grund-Regelsignal einen Wert einer Folge von rationalen Zahlen größer oder gleich null repräsentiert, wobei das Grund-Regelsignal einem Quotienten eines vorgebbaren Werts mit einem Betrag der Amplituden eines von einem Schallerzeuger erzeugten Signals entspricht, sofern der Betrag der Amplituden des vom Schallerzeuger erzeugten Signals größer einem Schwellwert größer Null ist, wobei und das Grund-Regelsignal einem vorgegebenen Maximalwert entspricht, wenn der Betrag der Amplituden des vom Schallerzeuger erzeugten Signals kleiner oder gleich dem Schwellwert ist; Erzeugen eines ersten Regelsignals aus der Differenz von Eins und dem Grund-Regelsignal und eines zweiten Regelsignals aus dem Produkt des Grund-Regelsignals mit einem Signal, welches zu einem früheren Zeitpunkt in Abhängigkeit vom Schallsignal erzeugtem Schall entspricht; Gewichten des Schallsignals mit dem ersten Regelsignal, um ein gewichtetes Signal zu erhalten; Subtrahieren des zweiten Regelsignals von dem Rückkoppelsignal, um ein modifiziertes Rückkoppelsignal zu erhalten, wobei im Schritt des Erzeugens des Schallsignals das Schallsignal unter Verwendung des modifizierten Rückkoppelsignals erzeugt wird; und Verwenden des gewichteten Schallsignals zur Erzeugung des in Abhängigkeit vom Schallsignal erzeugten Schalls.

In diesem Zusammenhang wird darauf hingewiesen, dass die in dieser Beschreibung und den Ansprüchen zur Aufzählung von Merkmalen verwendeten Begriffe "umfassen", "aufweisen", "beinhalten", "enthalten" und "mit", sowie deren grammatikalische Abwandlungen, generell als nichtabschließende Aufzählung von Merkmalen, wie z. B. Verfahrensschritten, Einrichtungen, Bereichen, Größen und dergleichen aufzufassen sind, und in keiner Weise das Vorhandensein anderer oder zusätzlicher Merkmale oder Gruppierungen von anderen oder zusätzlichen Merkmalen ausschließen.

Weitere Merkmale der Erfindung ergeben sich aus der nachfolgenden Beschreibung von Ausführungsbeispielen in Verbindung mit den Ansprüchen sowie den Figuren. In den Figuren werden gleiche bzw. ähnliche Elemente mit gleichen bzw. ähnlichen Bezugszeichen bezeichnet. Es wird darauf hingewiesen, dass die Erfindung nicht auf die Ausführungsformen der beschriebenen Ausführungsbeispiele beschränkt, sondern durch den Umfang der beiliegenden Patentansprüche bestimmt ist. Insbesondere können die einzelnen Merkmale bei erfindungsgemäßen Ausführungsformen in anderer Anzahl und Kombination als bei den untenstehend angeführten Beispielen verwirklicht sein. Bei der nachfolgenden Erläuterung eines Ausführungsbeispiels der Erfindung wird auf die beiliegenden Figuren Bezug genommen, von denen

| | |
|---|---|
| Figur 1 | perspektivisch ein System zur aktiven Beeinflussung von in der Abgasanlage geführtem Schall nach dem Stand der Technik zeigt; |
| Figur 2 | schematisch ein Blockdiagramm des Systems zur aktiven Beeinflussung von in der Abgasanlage geführtem Schall nach Figur 1 zeigt; |
| Figur 3 | schematisch einen Signalflussplan eines Systems zur aktiven Beeinflussung von Schall nach dem Stand der Technik zeigt; |
| Figuren 4A, 4B | schematisch unterschiedlich detaillierte Signalflusspläne eines Systems zur aktiven Beeinflussung von Schall nach dem Stand der Technik zeigen; |
| Figur 5 | schematisch den Amplitudenverlauf eines zu manipulierenden Geräuschs zeigt; |
| Figur 6 | schematisch einen Signalflussplan eines Systems zur aktiven Beeinflussung von Schall gemäß einer Ausführungsform der Erfindung zeigt; |
| Figur 7 | schematisch ein verbrennungsmotorisch betriebenes Fahrzeug mit dem System aus Figur 6 zeigt; |
| Figur 8 | ein Flussdiagramm eines Verfahrens zur aktiven Beeinflussung von in der Abgasanlage geführtem Schall gemäß der Erfindung zeigt; |
| Figur 9A | schematisch den Zeitverlauf eines Schalldruckpegels bei Verwendung des Systems aus dem Stand der Technik nach Figuren 4A, 4B zeigt; |
| Figur 9B | schematisch den Zeitverlauf eines Schalldruckpegels bei Verwendung des Systems aus Figur 6 unter extremer Bedatung zeigt; |
| Figur 10 | schematisch den Zeitverlauf eines Schalldruckpegels bei Verwendung des Systems aus Figur 6 zeigt; |
| Figuren 11A, 11B | schematisch den Zeitverlauf eines Schalldruckpegels bei Verwendung des Systems aus Figur 6 für unterschiedliche vorgebbare Werte zeigen; und |
| Figuren 12A, 12B, 12C | schematisch den Zeitverlauf eines Schalldruckpegels bei Verwendung des Systems aus Figur 6 zeigt, wenn zusätzlich passive Maßnahmen zur Schallbeeinflussung ergriffen werden. |

Im Folgenden wird unter Bezugnahme auf die Figuren eine bevorzugte Ausführungsform der Erfindung erläutert.

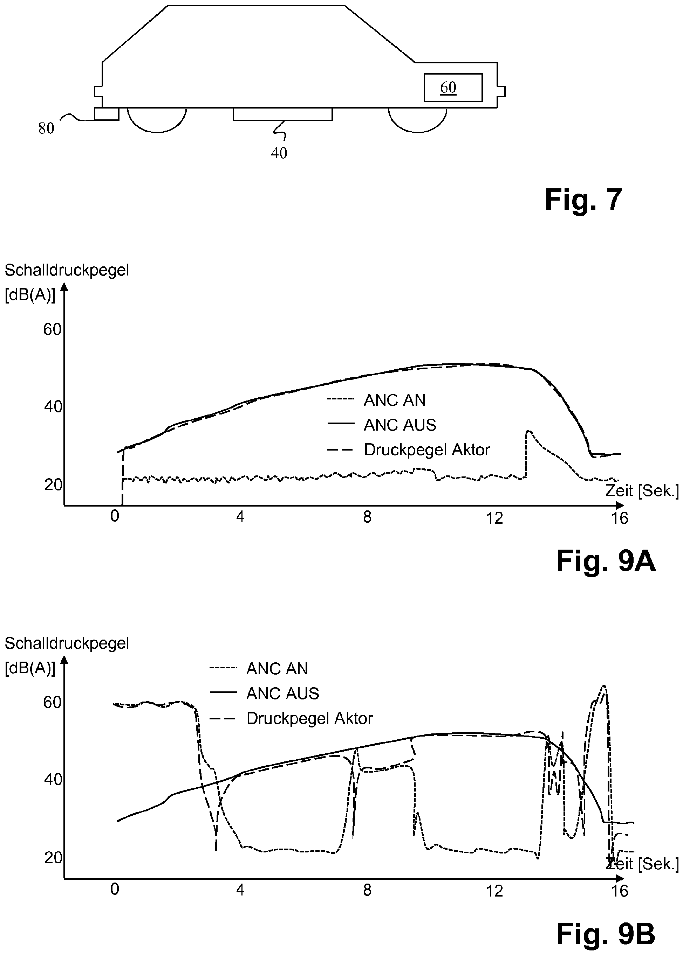

Ein in Figur 7 schematisch gezeigtes Kraftfahrzeug weist einen Motor in Form einer Verbrennungskraftmaschine 60 und eine Abgasanlage 40 auf, über welche in der Verbrennungskraftmaschine 60 im Betrieb erzeugte Abgase und Schall zu einem Endrohr 80 geführt werden. In der Abgasanlage 40 werden die Abgase gereinigt und wird der Schall gedämpft, bevor die Abgase und der Schall über das Endrohr 80 an die Umgebung abgegeben werden.

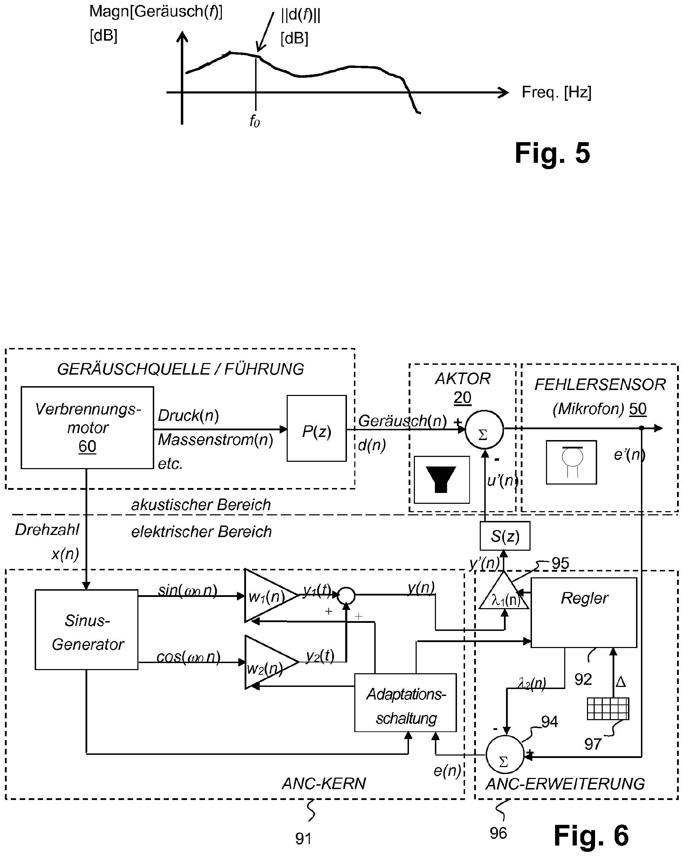

In Figur 6, welche schematisch einen Signalflussplan eines Systems zur aktiven Beeinflussung von Schall gemäß einer Ausführungsform der Erfindung zeigt, entsprechen die von der Verbrennungskraftmaschine 60 erzeugten und in der Abgasanlage 40 geführten Geräusche einem zu überlagernden Signal $d(n)$. Dabei soll die Abhängigkeit von n zum Ausdruck bringen, dass die von der Verbrennungskraftmaschine 60 erzeugten Geräusche vom Betriebszustand der Verbrennungskraftmaschine 60 (wie beispielsweise der Drehzahl und/oder dem Drehmoment der Verbrennungskraftmaschine 60) abhängen und sich damit im Zeitverlauf ändern. Dabei sind die Werte von n jedoch nicht kontinuierlich, sondern diskret.

In der Abgasanlage ist über eine Y-Leitung ein Schallerzeuger 20 (Aktor) mit einem Lautsprecher an die Abgasanlage gekoppelt. Der Lautsprecher wird mit einem Schallsignal $y'(n)$ beaufschlagt und erzeugt (unter Berücksichtigung der Übertragungsfunktion $S(z)$ des Schallerzeugers und zugehöriger Komponenten) einen Schall, der einem gewichteten zur Überlagerung verwendeten Signal $u'(n)$ entspricht, und mit in der Abgasanlage geführten Geräuschen überlagert wird.

Weisen die zu überlagernden Signale $d(n)$, welche den in der Abgasanlage geführten Geräuschen entsprechen, eine Phasenverschiebung von 90° gegenüber dem gewichteten zur Überlagerung verwendeten Signal $u'(n)$ des vom Lautsprecher erzeugten Schalls auf, und entsprechen sich die Signale $d(n)$ und $u'(n)$ auch in der Amplitude (d. h. $d(n) = - u'(n)$), so kommt es zu einer vollständigen Auslöschung der in der Abgasanlage geführten Geräusche.

Über einen als Fehlermikrofon ausgebildeten Fehlersensor 50, welcher bezogen auf die Strömungsrichtung des Abgases in der Abgasanlage stromabwärts der Stelle der Überlagerung der in der Abgasanlage geführten Geräusche mit dem vom Lautsprecher erzeugten Schall angeordnet ist, wird der über das Endrohr 80 ausgegebene Schall vermessen und ein entsprechendes Rückkoppelsignal $e'(n)$ ausgegeben.

Das Schallsignal $y'(n)$, mit welchem der Lautsprecher betrieben wird, wird von einem Antischall-System bereitgestellt, welches einen ANC-Kern 91 und eine ANC-Erweiterung 96 umfasst.

Der ANC-Kern 91 weist einen Sinusgenerator, erste und zweite Verstärker und eine Adaptionsschaltung auf, und bildet so einen Signalerzeuger. Auf die Ausführungen zu Figur 4B wird verwiesen.

Die ANC-Erweiterung 96 weist einen Regler 92, einen Gewichter 95 (welcher vorliegend durch einen Verstärker mit einstellbarer Verstärkung gebildet ist), eine Eingangsschnittstelle 97 (welche vorliegend als Mensch-Maschinenschnittstelle in Form einer Tastatur ausgebildet ist) und einen Addierer 94 auf.

In der in Figur 6 gezeigten Ausführungsform werden der ANC-Kern 91 und die ANC-Erweiterung 96 durch getrennte Mikroprozessoren realisiert. Alternativ können beide jedoch auch durch einen einzigen Mikroprozessor realisiert werden.

Der ANC-Kern 91 und die ANC-Erweiterung 96 sind mit einer Motorsteuerung (nicht eigens gezeigt) der Verbrennungskraftmaschine 60 verbunden und Empfangen von der Motorsteuerung ein Steuersignal in Form eines Eingangswellenvektors $x(n)$, welcher eine aktuelle Drehzahl und ein aktuelles Drehmoment der Verbrennungskraftmaschine 60 angibt. Weiter empfängt der Regler 92 der ANC-Erweiterung 96 über die Eingangsschnittstelle 97 eine Eingabe eines Benutzers. Bei der Benutzereingabe handelt es sich vorliegend um einen für den Betrag der Amplituden des Rückkoppelsignals vorgegebenen Wert $\Delta$. Dieser vorgegebene Wert $\Delta$ muss jedoch nicht konstant sein, sondern kann sich im Zeitverlauf ändern.

Es wird betont, dass die vorliegende Erfindung nicht auf die Verwendung einer Tastatur als Eingangsschnittstelle 97 beschränkt ist. Alternativ ist es beispielsweise auch möglich, geeignete vorgegebene Werte $\Delta$ für den Betrag der Amplituden des Rückkoppelsignals tabellarisch in der ANC-Erweiterung 96 abzulegen und bei Bedarf auszulesen. Dabei können die vorgegebenen Werte $\Delta$ auch eine Abhängigkeit vom Eingangswellenvektor $x(n)$ aufweisen.

Der ANC-Kern 91 erzeugt anhand der empfangenen Drehzahl und des Drehmoments auf bekannte Weise (vorliegend unter Verwendung eines FxLMS-Algorithmus) ein Schallsignal $y(n)$, welches geeignet wäre, das dem in der Abgasanlage geführten Schall entsprechende zu überlagernde Signal $d(n)$ auszulöschen, wenn der Lautsprecher mit dem Schallsignal $y(n)$ betrieben werden würde. Dabei berücksichtigt der ANC-Kern 91 die Übertragungsfunktion $S(z)$ des Schallerzeugers 20.

Weiter erzeugt der Regler 92 in Abhängigkeit von der empfangenen Drehzahl, dem empfangenen Drehmoment, und den über die Eingangsschnittstelle 97 empfangenen Werte $\Delta$ für den Betrag der Amplituden des Rückkoppelsignals ein erstes Regelsignal $\lambda_1(n)$ und ein zweites Regelsignal $\lambda_2(n)$.

Konkret werden in dieser Ausführungsform in dem Regler 92 für eine jeweilige Drehzahl und Drehmoment des Kraftfahrzeugs Grund-Regelsignale $\lambda(n)$ bestimmt. Dabei handelt es sich bei den Grund-Regelsignalen $\lambda(n)$ jeweils um rationale Zahlen größer gleich null. Im Zeitverlauf wird durch den Regler 92 daher eine Folge von Grund-Regelsignalen $\lambda(n)$ bestimmt, die eine Folge von rationalen Zahlen größer oder gleich null repräsentieren.

Zur Bestimmung des Grund-Regelsignals $\lambda(n)$ wird zunächst geprüft, ob der Betrag der Amplituden des vom Schallerzeuger 20 zu einem früheren Zeitpunkt zum Zwecke der Überlagerung erzeugten Signals ($\|u(n-1)\|$) größer einem vorab im Regler 92 gespeicherten Schwellwert $\varepsilon_1$ ist. In der gezeigten Ausführungsform ist der vorab gespeicherte Schwellwert $\varepsilon_1$ mit 0,0001 sehr klein. Ist dies der Fall, so wird das Grund-Regelsignal $\lambda(n)$ als Quotienten des vorgebbaren Werts $\Delta$ zum Betrag der Amplituden des vom Schallerzeuger 20 zu einem früheren Zeitpunkt zum Zwecke der Überlagerung erzeugten Signals ‖u(n-1)‖ bestimmt. Anderenfalls, wenn der Betrag der Amplituden des vom Schallerzeuger 20 zu einem früheren Zeitpunkt zum Zwecke der Überlagerung erzeugten Signals ‖u(n-1)‖ kleiner oder gleich dem Schwellwert $\varepsilon_1$ ist, wird das Grund-Regelsignal $\lambda(n)$ auf einen vorgegebenen Maximalwert $\Lambda_{MAX}$ gesetzt, der vorliegend den Wert "60" beträgt.

Es wird betont, dass die vorliegende Erfindung nicht auf einen konkreten Schwellwert $\varepsilon_1$ beschränkt ist. Es ist ausreichend, wenn der Schwellwert $\varepsilon_1$ größer Null ist. Auch ist die vorliegende Erfindung nicht auf einen Maximalwert $\Lambda_{MAX}$ von "60" beschränkt. Vielmehr hängt der Maximalwert $\Lambda_{MAX}$ von den verwendeten Komponenten des Systems ab.

In der gezeigten Ausführungsform liegen die früheren Zeitpunkte (n-1) des von dem Schallerzeuger erzeugten Signals u(n-1) gegenüber der Gegenwart jeweils um ein Zehnfaches einer internen Taktfrequenz des Signalerzeugers zurück. Die vorliegende Erfindung ist hierauf jedoch nicht beschränkt; allerdings sollten die früheren Zeitpunkte möglichst nah an der Gegenwart liegen, um einen Fehler gering zu halten.

Unterschiedliche Ansätze zum Bestimmen der Amplituden des vom Schallerzeuger 20 zu einem früheren Zeitpunkt erzeugten Signals ‖u(n-1)‖ werden zu einem späteren Zeitpunkt erläutert werden.

Das erste Regelsignal $\lambda_1(n)$ wird dann durch den Regler 92 als der Differenz von Eins und dem Grund-Regelsignal $\lambda(n)$ bestimmt.

Das zweite Regelsignal $\lambda_2(n)$ wird dann durch den Regler 92 als Produkt des Grund-Regelsignals $\lambda(n)$ mit einem vom Schallerzeuger 20 zu einem früheren Zeitpunkt zum Zwecke der Überlagerung erzeugten Signal u(n-1) bestimmt.

Der ANC-Kern 91 gibt das Schallsignal y(n) und der Regler 92 der ANC-Erweiterung 96 das erste Regelsignal $\lambda_1(n)$ an den Gewichter 95 aus.

Der Gewichter 95 gewichtet das Schallsignal y(n) mit dem ersten Regelsignal $\lambda_1(n)$ und gibt das so gewichtete Schallsignal y'(n) an den Lautsprecher des Schallerzeugers 20 aus. Somit wird der Lautsprecher mit dem gewichteten Schallsignal y'(n) betrieben. Unter Berücksichtigung der Übertragungsfunktion S(z) des Schallerzeugers 20 wird Schall, der einem gewichteten Signal u'(n) entspricht, mit in der Abgasanlage geführtem Schall, welcher dem Signal d(n) entspricht, zur Überlagerung gebracht.

Da das vom ANC-Kern 91 ursprünglich erzeugte Schallsignal y(n) zuvor mit dem ersten Regelsignal $\lambda_1(n)$ gewichtet worden ist, ist das gewichtete Schallsignal y'(n) in der Regel nicht mehr in der Lage, den in der Abgasanlage 40 geführten Schall vollständig auszulöschen, wenn der Lautsprecher mit dem Schallsignal y'(n) betrieben wird. Vielmehr wird der in der Abgasanlage geführte Schall in der Regel nur zu einem gewissen Anteil ausgelöscht oder aber auch verstärkt. Dies hängt vom vorgegebenen Werte $\Delta$ ab, welcher bei der Bestimmung des Grund-Regelsignals $\lambda(n)$ verwendet wird.

Das zweite Regelsignal $\lambda_2(n)$ wird vom Addierer 94 vom Rückkoppelsignal e'(n), welches vom Fehlersensor 50 empfangen wird, subtrahiert, um ein modifiziertes Rückkoppelsignal e(n) zu erhalten.

Der ANC-Kern 91 erhält das modifizierte Rückkoppelsignal e(n), und berücksichtigt es auf bekannte Weise bei der Erzeugung des Schallsignals y(n), welches geeignet ist, den in der Abgasanlage 40 geführten Schall d(n) auszulöschen, wenn der Lautsprecher mit dem Schallsignal y(n) betrieben wird.

Der dabei im ANC-Kern 91 und der ANC-Erweiterung implementierte Algorithmus basiert auf folgenden Überlegungen (die für jede Motorordnung des Verbrennungsmotors 60 separat erfolgt):

Der auszulöschende, in der Abgasanlage 40 geführte Schall d(n) kann für eine bestimmte Motorordnung und Drehzahl und damit für einen bestimmten Eingangswellenvektor **x**(n) (und damit eine Frequenz $f_0$) als grundsätzlich harmonisches Signal mit zeitlich veränderter Phase und Amplitude dargestellt werden

$$d(n) = D(n)\, sin(\omega_0 n + \phi_d(n)) \qquad\qquad \omega_0 = 2\,\pi\, f_0$$

wobei hier "n" den Zeitverlauf angibt (ein Zeitindex einer zeitdiskreten Reihe ist). $\Phi_d(n)$ wird als "Systemphase" bezeichnet und hängt nur von der Geräuschquelle ab.

Entsprechend muss der für die Auslöschung / Überlagerung vom Lautsprecher zu emittierende Schall ebenfalls einem harmonischen Signal u(n) mit zeitlich veränderter Phase und Amplitude entsprechen:

$$u(n) = U(n)\, sin(\omega_0 n + \phi_u(n))$$

Dabei sind D(n) und $\phi_d(n)$ zunächst nicht bekannt. Sobald die ANC-Steuerung konvergiert, ist jedoch folgende Näherung zulässig:

$$\phi_u(n) \approx \phi_d(n) \qquad\qquad (u(n)\ und\ d(n)\ sind\ in\ Phase)$$

Deshalb kann *u(n)* umformuliert werden zu:

$$u(n) = U(n)\ sin(\omega_0 n + \phi_d(n)).$$

Nach der Überlagerung des dem in der Abgasanlage 40 geführten Schall entsprechenden Signals *d(n)* durch das dem vom Lautsprecher emittierten Schall entsprechenden Signal *u(n)* ergibt sich der verbleibende Schall *e(n)* am Endrohr 80 für die Frequenz $f_0$ zu:

$$e(n) = d(n) - u(n)$$

In der Folge ist e(n) ebenfalls eine lineare Kombination harmonischer Signale und kann daher ebenfalls als Funktion der "Systemphase" $\phi_d(n)$ ausgedrückt werden:

$$e(n) = E(n)\ sin(\omega_0 n + \phi_d(n))$$

Mit dem erfindungsgemäßen System und Verfahren soll nun die Amplitude *E(n)* gesteuert werden.

Bei erfolgreicher Schallauslöschung konvergiert *e(n)* nach einiger Zeit für eine jeweilige Grundfrequenz $f_0$ gegen Null, so dass bei erfolgreicher Schallauslöschung gilt:

$$e(n) = d(n) - u(n) \qquad \Rightarrow \qquad 0 \approx d(n) - u(n)$$

Diese Formel kann umgeschrieben werden zu:

$$d(n) - \lambda\ u(n) + \lambda\ u(n) - u(n) \approx 0$$

und weiter zu

$$d(n) - (1-\lambda)\ u(n) - \lambda\ u(n) \approx 0$$

Dabei ist $\lambda$ eine reelle Zahl.

Es werden folgende neue Variablen *e'(n)*, *u'(n)* und *y'(n)* eingeführt, welche auch in Figur 6 verwendet werden:

$$e'(n) = d(n) - (1-\lambda)\ u(n) \qquad \Rightarrow \qquad e(n) = e'(n) - \lambda\ u(n)$$

$$u'(n) = (1-\lambda)\ u(n) = (1-\lambda)\ conv[s(n), y(n)] = conv[s(n), (1-\lambda)\ y(n)]$$

(wobei *conv* die Faltung zweier Zeitreihen bezeichnet)

$$y'(n) = (1-\lambda)\ y(n)$$

Wie bereits ausgeführt, soll mittels des Systems und Verfahrens gemäß der vorliegenden Erfindung keine vollständige Schallauslöschung angestrebt werden, sondern ein einem vorgegebenen Werte $\Delta$ entsprechender Betrag der Amplituden des Rückkoppelsignals. Dieser Wert kann niedriger, höher oder gleich demjenigen Wert sein, der sich bei ausgeschaltetem System für die Amplituden des Rückkoppelsignals ergeben würde. Das angestrebte Signal nach der Überlagerung (FINAL) ergibt sich daher zu

$$e'(n)_{FINAL} \approx \lambda\ u(n)$$

Erfindungsgemäß soll dieser Wert dem vorgegebenen Wert Δ entsprechen:

$$\|e'(n)_{FINAL}\| = \Delta \qquad \rightarrow \qquad \lambda\,\|u(n)\| = \Delta$$

wobei Δ der vorgebbare Wert und damit das gewünschte Schalldruckpegel-Niveau ist.

Da *u(n)* nicht konstant, sondern ein über n zeitvariantes Signal ist, muss auch λ zeitvariant sein.

$$\lambda(n) = \frac{\Delta}{\|u(n)\|}$$

Diese Formel kann in der ANC-Erweiterung nicht direkt verwendet werden, da das Problem einer algebraischen Schleife besteht: *u(n)* hängt von *λ(n)* ab, und *λ(n)* hängt von *u(n)* ab. Dieses Problem kann dadurch umgangen werden, dass zeitlich geringfügig zurückliegende Werte von *u(n)* verwendet werden (diese zeitlich zurückliegenden Werte werden als "n-1" bezeichnet). Dabei sollte der zeitliche Abstand so klein wie möglich gewählt werden, damit gilt:

$$\|u(n)\| \approx \|u(n\text{-}1)\|$$

Weiter muss eine Division durch den Wert "Null" vermieden werden.

Nun soll durch den Regler 92 ‖*u(n)*‖ bzw. ‖*u(n-1)*‖ berechnet werden. Wie bereits bei der Erläuterung von Figuren 4A und 4B erläutert, entspricht *u(n)* der Faltung (Konvolution) der Signale *s(n)* und *y(n)*

$$u(n) = conv[s(n),y(n)],$$

wobei *s(n)* die Impulsantwort der Übertragungsfunktion *S(z)* des Schallerzeugers 20 und der mit diesem verbundenen Komponenten ist. *s(n)* ist nicht bekannt. Allerdings ist es möglich, die Übertragungsfunktion *Ŝ(z)* der für die Schallerzeugung verwendeten Komponenten und die Impulsantwort *ŝ(n)* empirisch zu bestimmen und so abzuschätzen.

$$\tilde{u}(n) = conv[\hat{s}(n),y(n)] \approx u(n)$$

Somit ist folgende Abschätzung zulässig:

$$\|u(n)\| \approx \|u(n\text{-}1)\| \approx \|\tilde{u}(n\text{-}1)\|$$

Wobei *ũ(n)* das Signal abschätzt, welches den vom Schallerzeuger 20 ausgegebenen Schall repräsentiert.

Wird der Faltungsoperator *conv[.]* auf ein harmonisches Signal angewandt, so kann dieses einfach durch die Phasenverzögerung *TF_{PHASE}* und die Dämpfung *TF_{AMP}* bei der gegebenen Grundfrequenz *f_0* dargestellt werden:

$$D\ddot{a}mpfung: \|\hat{S}(z)\| = TF_{AMP} \text{ bei der gegebenen Grundfrequenz } f_0$$

$$Phasenverz\ddot{o}gerung: Arg\{\hat{S}(z)\} = TF_{PHASE} \text{ bei der gegebenen Grundfrequenz } f_0$$

$$\tilde{u}(n) = TF_{AMP}\{w_1(n)\sin(\omega_0 n - TF_{PHASE}) + w_2(n)\cos(\omega_0 n - TF_{PHASE})\}$$

$$\tilde{u}(n) = \tilde{U}(n)\sin(\omega_0 n + \phi_u(n))$$

Damit lässt sich das gesuchte Signal mit folgendem Pseudocode berechnen:

```
function Estimate_Actuator()
{
ũ(n-1) = TF_AMP{w1(n) sin(ω0n - TF_PHASE) + w2(n) cos(ω0n - TF_PHASE)}
}
```

Dann ergibt sich das modifizierte Rückkoppelsignal *e(n)* zu

$$e(n) = e'(n) - \lambda(n)\ \tilde{u}(n\text{-}1) = e'(n) - \lambda_2(n)$$

und das gewichtete Schallsignal *y'(n)* zu

$$y'(n) = [1 - \lambda(n)]\ y(n) = \lambda_1(n)\ y(n)$$

Für die Berechnung des ersten und zweiten Regelsignals $\lambda_1(n),\ \lambda_2(n)$ kann folgender Pseudocode verwendet werden:

```
If (‖ũ(n-1)‖ > ε1)
    {
```
$$\lambda(n) = \frac{\Delta}{\|\tilde{u}(n-1)\|}$$
```
    }
Else
    {
```
$$\lambda(n)\ =\ \Lambda_{MAX}$$
```
    }
```
$$\lambda_1(n)\ =\ 1\ -\ \lambda(n)$$
$$\lambda_2(n)\ =\ \lambda(n)\ *\ \tilde{u}(n\text{-}1)$$
```
ũ(n-1) = Estimate_Actuator()
‖ũ(n-1)‖ = Estimate_ActuatorWaveAmplitude()
```

Dabei werden $\tilde{u}(n\text{-}1)$ und $\|\tilde{u}(n\text{-}1)\|$ jeweils mit "0" initialisiert, und nach jeder Berechnung von $\lambda_1(n)$ und $\lambda_2(n)$ aktualisiert, so dass keine algebraische Schleife auftritt. Die Werte $\Lambda_{MAX}$ und $\varepsilon_1$ sind Konstanten, die von den im ANC-Kern und der ANC-Erweiterung verwendeten Mikroprozessoren (oder digitalen Signalprozessoren), der Leistungsfähigkeit des Schallerzeugers und dergleichen abhängen und empirisch bestimmt werden können.

Der Betrag der Amplitude $\|\tilde{u}(n\text{-}1)\|$ ändert sich ständig, und sollte daher mit jeder Taktrate des Systems aktualisiert werden.

Die folgenden vier Verfahren zur Berechnung von $\|\tilde{u}(n\text{-}1)\|$ werden vorgeschlagen:

**1) Längenmethode ("Magnitude method")**

$\tilde{u}(n)$ kann als die Summe zweier orthogonaler Vektoren gesehen werden; in der Folge kann der Betrag mit folgendem Pseudocode durch die Länge der Vektoren berechnet werden:

```
function Estimate_ActuatorWaveAmplitude()  /*Magnitude method*/

{

||ũ(n-1)|| = SQRT[w1(n)² + w2(n)²] * TFAMP(ω0)

}
```

wobei SQRT die Quadratwurzel ist. Diese kann als Kennfeld im Regler 92 gespeichert werden, so dass dieses Verfahren im Hinblick auf die Rechenleistung sehr effizient sein kann.

**2) Analytische Methode ("Analytical method")**

$\tilde{u}(n)$ kann wie folgt dargestellt werden:

$$\tilde{u}(n) = TF_{AMP}\{w_1(n) [sin(\omega_0 n) cos(TF_{PHASE}) + cos(\omega_0 n) sin(TF_{PHASE})] + w_2(n) [cos(\omega_0 n) cos(TF_{PHASE}) - sin(\omega_0 n) sin(TF_{PHASE})]\}$$

Definiert man dabei

$$sin(\tau) = sin(\omega_0 n) cos(TF_{PHASE}) + cos(\omega_0 n) sin(TF_{PHASE})$$

$$cos(\tau) = cos(\omega_0 n) cos(TF_{PHASE}) - sin(\omega_0 n) sin(TF_{PHASE})$$

$$k_1(n) = TF_{AMP}(\omega_0) w_1(n)$$

$$k_2(n) = TF_{AMP}(\omega_0) w_2(n)$$

kann ein einfacherer Ausdruck für $\tilde{u}(n)$ erhalten werden:

$$\tilde{u}(n) = k_1(n) sin(\tau) + k_2(n) cos(\tau)$$

Die Amplitude ist das lokale Maximum $MAX_{LOCAL}$ der vorstehenden harmonischen Funktion wobei die Punkte gesucht werden, an denen die erste Ableitung von ü(n) gleich Null ist (da die Signale Sinusschwingungen sind, gilt abs($MIN_{LOCAL}$) = $MAX_{LOCAL}$). Die Funktion *"abs(.)"* liefert dabei den Absolutwert.

$$\frac{d}{d\tau}\tilde{u}(n) = -k_1(n) cos(\tau) + k_2(n) sin(\tau) = 0$$

$$\tau_0 = tan^{-1}\left(\frac{k_1(n)}{k_2(n)}\right) = tan^{-1}\left(\frac{TF_{AMP}(\omega_0) w_1(n)}{TF_{AMP}(\omega_0) w_2(n)}\right) = tan^{-1}\left(\frac{w_1(n)}{w_2(n)}\right)$$

$$||\tilde{u}(n)|| = MAX_{LOCAL} = abs[k_1(n) sin(\tau) + k_2(n) cos(\tau)]$$

$$= abs[TF_{AMP}(\omega_0) w_1(n) sin(\tau) + TF_{AMP}(\omega_0) w_2(n) cos(\tau)]$$

$$= TF_{AMP}(\omega_0) * abs[w_1(n) sin(\tau) + w_2(n) cos(\tau)]$$

Somit kann $\|\tilde{u}(n)\|$ mit folgendem Pseudocode berechnet werden:

```
function Estimate_ActuatorWaveAmplitude() /*Analytical method*/
{
If abs(w2(n) > ε0)
    {
        τ0 = arctg[w1(n) / w2(n)];
        ‖ũ(n-1)‖ = TFAMP(ω0) * abs[w1(n) sin(τ0) + w2(n) cos(τ0)];
    }
    else
    {
        ‖ũ(n-1)‖ = TFAMP(ω0) w1(n)
    }
}
```

Dabei ist *arctg* die Arcustangens-Funktion. $\varepsilon_0$ ist ein kleiner Wert, der von der Auflösung des Algorithmus und dem verwendeten Mikroprozessoren (oder digitalen Signalprozessoren) abhängt, und typischerweise 0,001 beträgt. Die Arcustangens-Funktion kann als Kennfeld im Regler 92 gespeichert werden, so dass dieses Verfahren im Hinblick auf die Rechenleistung sehr effizient sein kann. Weiter werden die Singularitäten der Arcustangens-Funktion korrekt behandelt, wenn $w_2(n) = 0$ ist.

Die beiden vorstehenden Verfahren erlauben es, $\|\tilde{u}(n-1)\|$ genau zu berechnen.

Da sich die Amplitude des dem Geräusch *d(n)* entsprechenden Signals verglichen mit der Frequenz sehr langsam ändern, ist es möglich, $\|\tilde{u}(n-1)\|$ langsamer als die Taktrate zu aktualisieren (z.B. im Verhältnis 1: 2 bis 1: 20), so dass die erforderliche Rechenleistung reduziert wird.

**3) Analytische Methode mit reduzierter Abtastung ("Under-sampled analytical method")**

Aus

$$\tilde{u}(n-1) = TF_{AMP}\{w_1(n)\sin(\omega_0 n - TF_{PHASE}) + w_2(n)\cos(\omega_0 n - TF_{PHASE})\}$$

ergibt sich, dass $\tilde{u}(n)$ als lineare Funktion des Phasor-Vektor *w(n)* betrachtet werden kann. Wenn der Phasor-Vektor *w(n)* parallel zu der X-Achse oder der Y-Achse ist, ist der Betrag der Amplitude $\|\tilde{u}(n-1)\|$ einfach ein Teil der einen oder anderen Komponente des Phasor $w_1(n)$ oder $w_2(n)$. Bei diesem Verfahren wird $\|\tilde{u}(n-1)\|$ für jede Periode $1/f_0$ zweimal oder viermal aktualisiert. Wie bereits ausgeführt, ist es nicht erforderlich, $\|\tilde{u}(n-1)\|$ mit jeder Taktrate zu aktualisieren.

Somit kann $\|\tilde{u}(n-1)\|$ mit folgendem Pseudocode berechnet werden:

```
function     Estimate_ActuatorWaveAmplitude()     /*Under-sampled
analytical method, 4 times update*/
{
    if [abs(w2(n)) <= ε0]
    {
        ‖ũ(n-1)‖ = TFAMP(ω0) w1(n);
    }
    else


            if [abs(w1(n)) <= ε0]
            {
                ‖ũ(n-1)‖ = TFAMP(ω0) w2(n)
            }
        }
```

oder

```
function     Estimate_ActuatorWaveAmplitude()     /*Under-sampled
analytical method, 2 times update*/
{
    if [abs(w2(n)) <= ε0]
    {
        ‖ũ(n-1)‖ = TFAMP(ω0) w1(n);
    }
}
```

Dabei ist $\varepsilon_0$ ein kleiner Wert, der von der Auflösung des Algorithmus und den verwendeten Mikroprozessoren (oder digitalen Signalprozessoren) abhängt, und typischerweise 0,01 beträgt. Diese Berechnungsweise ist sehr effizient.

**4) Vergleichsmethode ("Compare method")**

Für wellenförmige Signale gibt es auch ein weniger optimales Verfahren, welches sich durch folgenden Pseudocode beschreiben lässt:

```
function Estimate_ActuatorWaveAmplitude() /*Compare method */
{
    ũ_ABS(n) = abs(ũ(n));
    If (ũ_ABS(n-1) >= ũ_ABS(n-2)) and (ũ_ABS(n-1) >= ũ_ABS(n))
    {
        ‖ũ(n-1)‖ = ũ_ABS(n-1);
    }
    ũ_ABS(n-2) = ũ_ABS(n-1);
    ũ_ABS(n-1) = ũ_ABS(n);
}
```

Vorteilhaft an diesem Verfahren ist, dass keine Quadratwurzel- oder Arcustangens-Funktion benötigt wird. Dabei wird $\|\tilde{u}(n-1)\|$ in jeder Wellenperiode allerdings auch nur zweimal aktualisiert.

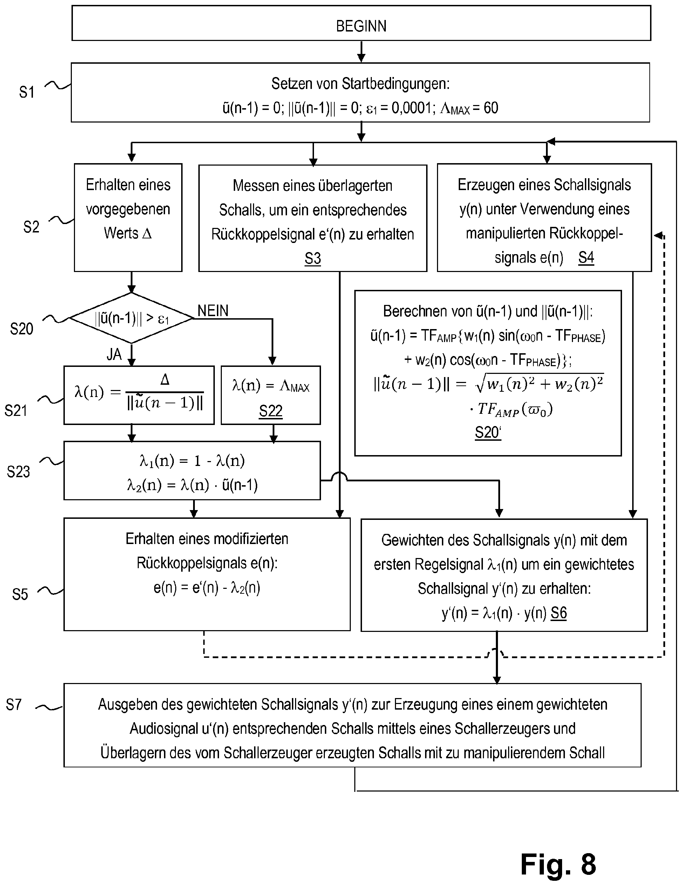

Im Folgenden wird unter Bezugnahme auf Figur 8 ein Verfahren zum Betreiben des vorstehend beschriebenen Systems beschrieben.

In einem ersten Schritt S1 werden im Regler 92 der ANC-Erweiterung 96 Startwerte für verwendete Variablen und Konstanten gesetzt: $\tilde{u}(n-1) = 0$; $\|\tilde{u}(n-1)\| = 0$; $\varepsilon_1 = 0{,}0001$; $\Lambda_{MAX} = 60$.

Anschließend wird in Schritt über die Eingangsschnittstelle 97 im Regler 92 ein vorgegebener Wert $\Delta$ erhalten.

Parallel dazu wird in Schritt S3 mittels des Fehlersensors 50 überlagerter Schall gemessen, um ein entsprechendes Rückkoppelsignal e'(n) zu erhalten.

Weiter wird parallel dazu in Schritt S4 durch den ANC-Kern 91 unter Verwendung des manipulierten Rückkoppelsignals *e(n)* ein Schallsignals *y(n)* erzeugt.

In dem auf Schritt S2 folgenden Schritt S20 wird bestimmt, ob die Bedingung $\|\tilde{u}(n-1)\| > \varepsilon_1$ erfüllt ist. Hierfür werden in Schritt S20' die Werte für $\tilde{u}(n-1)$ und $\|\tilde{u}(n-1)\|$ berechnet. Dies wurde vorstehend detailliert erläutert und kann beispielsweise unter Verwendung der folgenden Formeln erfolgen:

$$\tilde{u}(n-1) = TF_{AMP}\{w_1(n) \sin(\omega_0 n - TF_{PHASE}) + w_2(n) \cos(\omega_0 n - TF_{PHASE})\}$$

$$\|u(n-1)\| = \sqrt{w_1(n)^2 + w_2(n)^2} \cdot TF_{AMP}(\varpi_0)$$

Es wird betont, dass die in Schritt S20' erfolgende Berechnung der Werte für $\tilde{u}(n-1)$ und $\|\tilde{u}(n-1)\|$ nach jedem der vorstehend beschriebenen oder aus dem Stand der Technik bekannten Verfahren erfolgen kann.

Ist in Schritt S20 die Bedingung erfüllt, wird das Grund-Regelsignals $\lambda(n)$ in Schritt S21 zu

$$\lambda(n) = \frac{\Delta}{\|\tilde{u}(n-1)\|}$$

berechnet.

Anderenfalls, wenn die Bedingung von Schritt S20 nicht erfüllt ist, wird in Schritt S22 Grund-Regelsignals $\lambda(n)$ auf den Maximalwert $\Lambda_{MAX}$ gesetzt.

Anschließend werden in Schritt S23 die ersten und zweiten Regelsignale $\lambda_1(n)$, $\lambda_2(n)$ wie folgt berechnet:

$$\lambda_1(n) = 1 - \lambda(n)$$

$$\lambda_2(n) = \lambda(n) \cdot \tilde{u}(n-1)$$

Im folgenden Schritt S5 wird unter Verwendung des in Schritt S23 erhaltenen zweiten Regelsignals $\lambda_2(n)$ und des in Schritt S3 gemessenen Rückkoppelsignals $e'(n)$ ein modifiziertes Rückkoppelsignal $e(n)$ nach folgender Formel berechnet:

$$e(n) = e'(n) - \lambda_2(n)$$

Das modifizierte Rückkoppelsignal $e(n)$ wird in Schritt S4 verwendet, was durch die gestrichelte Linie angedeutet ist.

Parallel dazu wird in Schritt S6 unter Verwendung des in Schritt S23 erhaltenen ersten Regelsignals $\lambda_1(n)$ und des in Schritt S4 erzeugten Schallsignals $y(n)$ ein gewichtetes Schallsignal $y'(n)$ nach folgender Formel berechnet:

$$y'(n) = \lambda_1(n) \cdot y(n)$$

Das gewichtete Schallsignal $y'(n)$ wird in Schritt S7 zur Erzeugung eines einem gewichteten Audiosignal $u'(n)$ entsprechenden Schalls mittels des Schallerzeugers 20 und zum Überlagern des vom Schallerzeuger 20 erzeugten Schalls mit zu manipulierendem Schall ausgegeben, bevor das Verfahren am Ausgang von Schritt S1 fortfährt.

In den Figuren 9A bis 12C ist gezeigt, welche Wirkung das erfindungsgemäße System und Verfahren entfaltet. Dabei wurde die Abgasanlage eines verbrennungsmotorisch betriebenen Fahrzeugs entsprechend überarbeitet und um das erfindungsgemäße System ergänzt.

Wie aus Figur 9A ersichtlich, versuchen herkömmliche Systeme (ANC AN) kontinuierlich, den Schalldruckpegel gegenüber dem unmanipulierten Schall (ANC AUS) auf einen möglichst niedrigen Wert (hier etwa 20 dB) zu senken. Dies erfolgt, solange die Dynamik und Leistungsfähigkeit des verwendeten Systems es zulassen. Zwischen etwa der 13-ten und 15-ten Sekunde ist ein Transient (instationärer Einschwingzustand) erkennbar, der darauf zurückzuführen ist, dass die Dynamik des verwendeten Systems nicht ausreichend ist. Ergänzend ist der sich am Aktor (Schallerzeuger) ergebende Druckpegel gezeigt.

Im Vergleich hierzu ist es mittels des erfindungsgemäßen Systems möglich, den Schalldruckpegel gegenüber dem unmanipulierten Schall (ANC AUS) auf einen beliebig vorgebbaren Wert $\Delta$ anzuheben (bis etwa 3,5 Sekunden und zwischen 15 und 16 Sekunden rund 60 dB) oder abzusenken (ab etwa 4 Sekunden bis etwa 7 Sekunden etwa 20 dB, ab etwa 8 Sekunden bis etwa 9 Sekunden etwa 40 dB, ab etwa 9,5 Sekunden bis etwa 13,5 Sekunden etwa 20 dB). Bei jeder Änderung des vorgebbaren Wertes $\Delta$ kommt es zu einem kurzen Einschwingverhalten der Steuerung und damit zu Transienten im Signalverlauf. Es ist zu beachten, dass für dieses Beispiel eine extreme Bedatung gewählt wurde (der vorgebbare Wert $\Delta$ weist starke Sprünge auf).

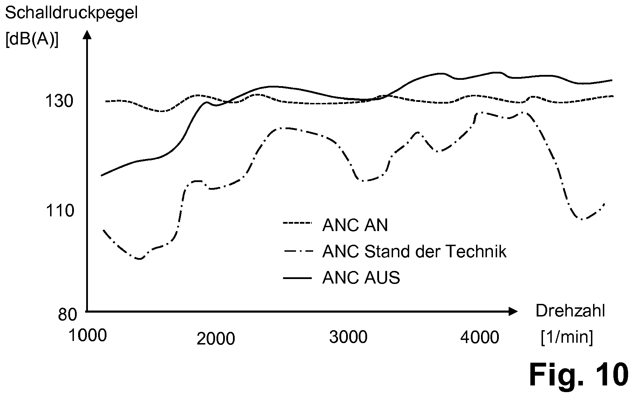

In Figur 10 wird das Verhalten des erfindungsgemäßen Systems und Verfahrens bei hohen Schalldruckpegeln, bei welchen die verwendeten Schallerzeuger an ihre Leistungsgrenze kommen, mit einem System aus dem Stand der Technik verglichen. Ersichtlich ist es mittels der vorliegenden Erfindung (ANC AN) möglich, den Schalldruckpegel gegenüber dem unmanipulierten Schall (ANC AUS) weitgehend konstant bei einem vorgegebenen Wert $\Delta$ (hier rund 130 dB) zu halten und dafür den ausgegebenen Schall entweder anzuheben (bis etwa 2000 1/min) oder abzusenken (über etwa 2000 1/min) oder in etwa konstant zu halten (im Bereich um 3200 1/min). Das System aus dem Stand der Technik (ANC Stand der Technik) weist demgegenüber einen sehr ungleichmäßigen Schalldruckpegel auf.

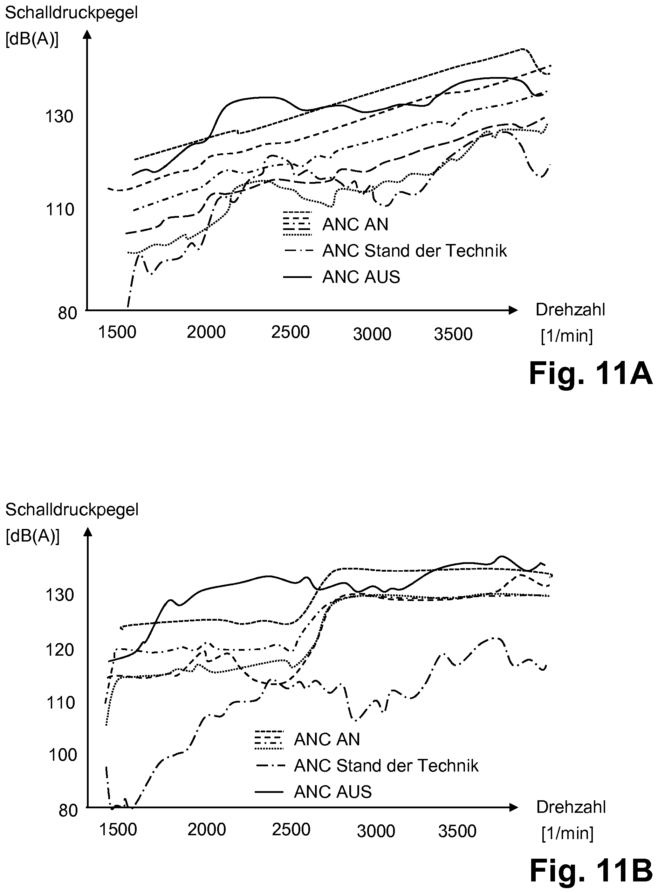

In Figur 11A sind verschiedene Messergebnisse gezeigt, wie sie sich bei unterschiedlicher Bedatung des erfindungsgemäßen Systems bei der Abgasanlage eines Dieselfahrzeugs eingestellt haben. Dabei wurde der vorgegebene Wert $\Delta$ nicht konstant gehalten, sondern linear mit der Drehzahl erhöht. Auch hier zeigt die Erfindung (ANC AN) einen wesentlich ruhigeren Verlauf des Schalldruckpegels als der Stand der Technik (ANC Stand der Technik). Je nach Bedatung erfolgt auch hier eine Anhebung und/oder Absenkung des Schalldruckpegels gegenüber dem unmanipulierten Schall (ANC AUS).

In Figur 11B sind ebenfalls verschiedene Messergebnisse gezeigt, wie sie sich bei unterschiedlicher Bedatung des erfindungsgemäßen Systems bei der Abgasanlage eines Dieselfahrzeugs eingestellt haben. Dabei wurde der vorgegebene Wert $\Delta$ nicht konstant gehalten, sondern bis etwa 2600 1/min konstant auf einem ersten relativ niedrigen Wert gehalten und über 2600 1/min auf einen höheren Wert erhöht.

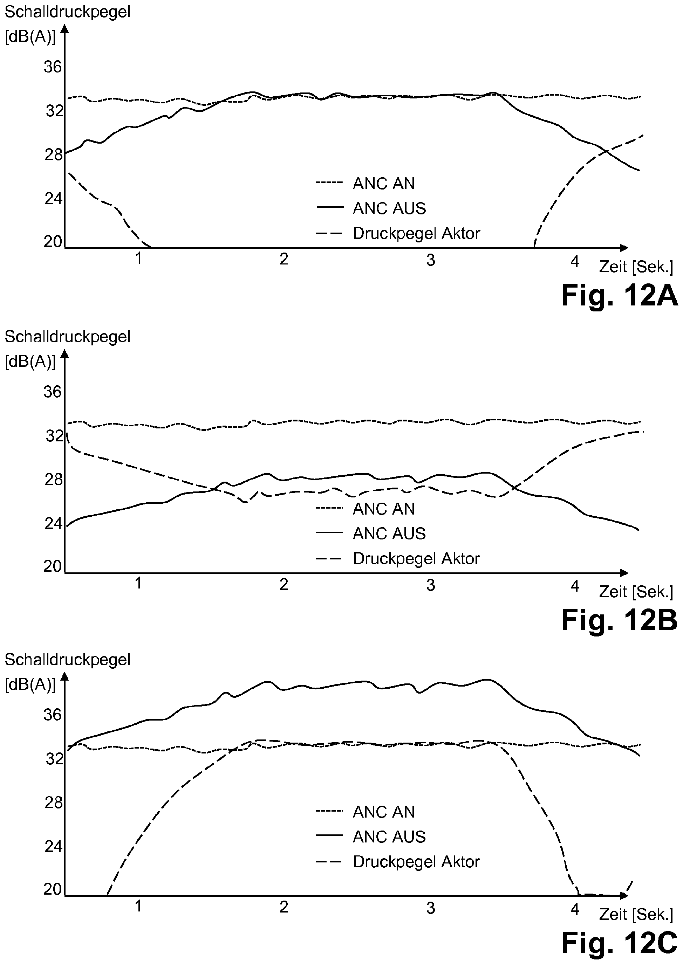

Aus den Figuren 12A, 12B und 12C ist ersichtlich, wie sich die Verwendung des erfindungsgemäßen Systems nachweisen lässt. Dabei wurde im Zeitverlauf die Drehzahl einer verwendeten Verbrennungskraftmaschine zunächst linear von 1.200 Umdrehungen pro Minute auf 2.000 Umdrehungen pro Minute erhöht, einige Zeit konstant gehalten und dann wieder linear abgesenkt. Der Schalldruckpegel für die dritte Motorordnung wurde gemessen.

Figuren 12A bis 12C zeigen jeweils den Verlauf des Schalldruckpegels bei angeschaltetem (ANC AN) bzw. abgeschaltetem System (ANC AUS) sowie den Druckpegel des Aktors bei angeschaltetem System. Ersichtlich bewirkt das erfindungsgemäße System einen weitgehend konstanten Schalldruckpegel von rund 33 dB.

In Figur 12B wurde die Abgasanlage gegenüber Figur 12A mechanisch gedämpft und so insgesamt um etwa 4 dB leiser gemacht. Ersichtlich ändert diese mechanische Dämpfung nichts daran, dass das erfindungsgemäße System einen weitgehend konstanten Schalldruckpegel von etwa 33 dB bewirkt. Es wird gleichzeitig mehr Energie für den Aktor benötigt, da der Schalldruckpegel gegenüber dem abgeschalteten System angehoben werden muss. Dieser Effekt tritt bei herkömmlichen Systemen nicht auf.

In Figur 12C wurde die Abgasanlage gegenüber Figur 12A mechanisch um etwa 4 dB lauter gemacht. Ersichtlich ändert dies nichts daran, dass das erfindungsgemäße System einen weitgehend konstanten Schalldruckpegel von etwa 33 dB bewirkt.

Somit kann ein Nachweis der Erfindung bei verbrennungsmotorisch betriebenen Fahrzeugen mit folgendem Verfahren erfolgen:
Zunächst wird mittels eines Fehlermikrofons in der Abgasanlage stromabwärts des Bereichs der Schallüberlagerung der Schalldruckpegel bei ausgeschaltetem System unter kontrollierten Bedingungen (z. B. bei einer Drehzahlrampe von 800 bis 4.500 Umdrehungen pro Minute bei konstanter Last von 50 %) gemessen.

Anschließend wird der Schalldruckpegel mit demselben Fehlermikrofon unter denselben Bedingungen bei eingeschaltetem System gemessen. Gleichzeitig wird die Anregung des Aktors (Schallerzeugers) gemessen. Es werden einige stationäre Betriebspunkte der gewonnenen Messkurven ausgewählt.

Nun wird die Geometrie der passiven Abgasanlage durch mechanische Maßnahmen so verändert, dass der mittels des Fehlermikrofons gemessene Schalldruckpegel leiser oder lauter wird (um etwa 3 dB).

Anschließend wird die Messung bei eingeschaltetem System für die stationären Betriebspunkte wiederholt. Die gemessenen Signale werden nach ihrer Motorordnung spezifisch gefiltert.

Wird die vorliegende Erfindung verwendet, sollte die mechanische Manipulation der Abgasanlage nicht zur Instabilität des Systems zur Beeinflussung von Schall führen. Weiter sollte der mit dem Fehlermikrofon gemessene Schalldruckpegel beim eingeschalteten System beim mechanisch manipulierten System unter Berücksichtigung gewisser Toleranzen dem mit dem Fehlermikrofon gemessenen Schalldruckpegel bei eingeschaltetem System beim mechanisch nicht manipulierten System entsprechen (für die stationären Betriebspunkte).

**Bezugszeichenliste**

| | |
|---|---|
| 1 | Endrohr |
| 2 | Lautsprecher |
| 3 | Schallerzeuger |
| 4 | Abgasanlage |
| 5 | Fehlermikrofon |
| 6 | Verbrennungskraftmaschine |
| 6' | Motorsteuerung |
| 6" | Ansauganlage |
| 7 | System zur aktiven Schallauslöschung |
| 8 | Mündung |
| 9 | Regelung |
| 20 | Schallerzeuger /Aktor |
| 40 | Abgasanlage |
| 41 | Mikrofon |
| 50 | Fehlersensor |
| 60 | Motor |
| 80 | Endrohr |
| 91 | Signalerzeuger / ANC-Kern |
| 92 | Regler |
| 94 | Addierer |
| 95 | Gewichter |
| 96 | ANC-Erweiterung |
| 97 | Eingangsschnittstelle |
| $d(n)$ | von der Übertragungsfunktion P(z) erzeugtes, zu überlagerndes Signal (entspricht dem von der Geräuschquelle erzeugten Geräusch) |
| $e(n)$ | (modifiziertes) Rückkoppelsignal (entspricht dem Schalldruck des überlagerten Geräuschs) |
| $e'(n)$ | unmodifiziertes Rückkoppelsignal |
| $e(z)$ | z-Transformierte des Signals $e(n)$ |

| | | |
|---|---|---|
| $EO_i$ | | i-te Motorordnung |
| $f_0$ | | Grundfrequenz |
| $P(z)$ | | z-Transformierte der Übertragungsfunktion der Geräuschquelle (entspricht der Funktion, auf welcher die Signalerzeugung (und damit Schallerzeugung) durch die Geräuschquelle beruht) |
| $u(n)$ | | zur Überlagerung verwendetes Signal (entspricht dem Schalldruck eines Schallerzeugers, welcher den zu überlagernden Schall erzeugt) |
| $u'(n)$ | | gewichtetes zur Überlagerung verwendetes Signal |
| $u(n-1)$ | | früheres zur Überlagerung verwendetes Signal |
| $u(z)$ | | z-Transformierte des Signals $u(n)$ |
| $S(z)$ | | z-Transformierte der Übertragungsfunktion des Schallerzeugers (entspricht der Umsetzung des Signals $y(n)$ in das Signal $u(n)$) |
| $s(n)$ | | Impulsantwort der zweiten Übertragungsfunktion $S(z)$ |
| $\hat{S}(z)$ | | Abschätzung der z-Transformierten der zweiten Übertragungsfunktion |
| $\hat{s}(n)$ | | Impulsantwort der Abschätzung der zweiten Übertragungsfunktion $\hat{S}(z)$ |
| $w(n)$ | | Phasor-Vektor / Verstärkung |
| $w^T(n)$ | | Transponierte des Phasor-Vektors $w(n)$ |
| $w_1(n), w_2(n)$ | | Verstärkungsfaktoren |
| $x(n)$ | | Eingangswellenvektor |
| $x^T(n)$ | | Transponierte des Eingangswellenvektor $x(n)$ |
| $y(n)$ | | vom ANC-Kern ausgegebenes (Schall-)Signal |
| $y'(n)$ | | gewichtetes, vom ANC-Kern ausgegebenes (Schall-)Signal |
| $y_1(n), y_2(n)$ | | vom ANC-Kern ausgegebene, relativ zueinander um 90° verschobene Signale |
| $y(z)$ | | z-Transformierte des Signals $y(n)$ |
| $\varepsilon_1$ | | Schwellwert größer Null |
| $\mu$ | | Anpassungsgeschwindigkeit |
| $\lambda$ | | Grund-Regelsignal |
| $\lambda_1, \lambda_2$ | | erstes / zweites Regelsignal |
| $\Delta$ | | vorgebbarer Wert für den Betrag der Amplituden des Rückkoppelsignals |
| $\Lambda_{MAX}$ | | Maximalwert des Grund-Regelsignals |

**Patentansprüche**

1. System zur aktiven Schallbeeinflussung, aufweisend:

   einen Schallerzeuger (20), welcher ausgebildet ist, bei Beaufschlagung mit einem Audiosignal Schall zu erzeugen und diesen mit einem zu manipulierenden Schall zu überlagern,
   einen Fehlersensor (50), welcher überlagerten Schall, der sich aus der Überlagerung des von dem Schallerzeuger (20) erzeugten Schalls mit dem zu manipulierendem Schall ergibt, misst und ein entsprechendes Rückkoppelsignal (e'(n)) ausgibt;
   einen Signalerzeuger (91), der ein Schallsignal (y(n)) erzeugt und ausgibt;
   einen Regler (92), der ein erstes Regelsignal ($\lambda_1(n)$) und ein zweites Regelsignal ($\lambda_2(n)$) erzeugt;
   einen Addierer (94), der das zweite Regelsignal ($\lambda_2(n)$) von dem Rückkoppelsignal (e'(n)) subtrahiert, und das so erhaltene modifizierte Rückkoppelsignal (e(n)) an den Signalerzeuger (91) ausgibt; und
   einen Gewichter (95), der zur Erzeugung des Audiosignals das von dem Signalerzeuger (91) ausgegebene Schallsignal (y(n)) mit dem von dem Regler (92) erzeugten ersten Regelsignal ($\lambda_1(n)$) gewichtet und das so gewichtete Schallsignal (y'(n)) an den Schallerzeuger (20) ausgibt;
   **dadurch gekennzeichnet, dass**
   der Signalerzeuger (91) weiter ausgebildet ist, das Schallsignal (y(n)) in Abhängigkeit von dem modifizierten Rückkoppelsignal (e(n)) zu erzeugen; und
   der Regler (92) ausgebildet ist, das erste und zweite Regelsignal ($\lambda_1(n)$, $\lambda_2(n)$) so zu erzeugen, dass ein Betrag der Amplituden des Rückkoppelsignals ($\|e'(n)\|$) einem vorgebbaren Wert ($\Delta$) und damit einem gewünschten Schalldruckpegel des sich aus der Überlagerung des von dem Schallerzeuger (20) erzeugten Schalls mit dem zu manipulierendem Schall ergebenden überlagerten Schall entspricht.

2. System nach Anspruch 1,
   wobei der Regler (92) ausgebildet ist, das erste und zweite Regelsignal ($\lambda_1(n)$, $\lambda_2(n)$) unter Verwendung eines Grund-Regelsignals ($\lambda(n)$) zu erzeugen, wobei das Grund-Regelsignals ($\lambda(n)$) einen Wert einer Folge von rationalen Zahlen größer oder gleich null repräsentiert,
wobei das Grund-Regelsignal ($\lambda$(n)) einem Quotienten des vorgebbaren Werts ($\Delta$) mit einem Betrag der Amplituden des vom Schallerzeuger (20) erzeugten Signals ($\|u(n)\|$) entspricht, sofern der Betrag der Amplituden des vom Schallerzeuger (20) erzeugten Signals ($\|u(n)\|$) größer einem Schwellwert ($\varepsilon_1$) größer Null ist, und wobei das Grund-Regelsignal ($\lambda$(n)) einem vorgegebenen Maximalwert ($\Lambda_{MAX}$) entspricht, wenn der Betrag der Amplituden des vom Schallerzeuger (20) erzeugten Signals ($\|u(n)\|$) kleiner oder gleich dem Schwellwert ($\varepsilon_1$) ist.

**3.** System nach Anspruch 2, wobei der Regler (92) ausgebildet ist, das erste Regelsignal ($\lambda_1$(n)) aus der Differenz von Eins und dem Grund-Regelsignal ($\lambda$(n)) zu erzeugen.

**4.** System nach einem der Ansprüche 2 oder 3, wobei der Regler (92) ausgebildet ist, das zweite Regelsignal ($\lambda_2$(n)) aus dem Produkt des Grund-Regelsignals ($\lambda$(n)) mit einem vom Schallerzeuger (20) zu einem früheren Zeitpunkt erzeugten Signal (u(n-1)) zu erzeugen.

**5.** System nach Anspruch 4, wobei die früheren Zeitpunkte (n-1) des von dem Schallerzeuger erzeugten Signals (u(n-1)) gegenüber dem Grund-Regelsignal ($\lambda$(n)) um ein Einfaches oder Mehrfaches einer internen Taktfrequenz des Signalerzeugers zurückliegen.

**6.** System nach einem der Ansprüche 2 bis 5, wobei der Regler (92) ausgebildet ist, das vom Schallerzeuger (20) erzeugte Signal (u(n)) durch Faltung der Übertragungsfunktion (S(z)) des Schallerzeugers (20) mit dem vom Gewichter (95) ausgegebenen gewichteten Schallsignal (y'(n)) zu ermitteln.

**7.** System nach Anspruch 6, wobei der Regler (92) ausgebildet ist, anstelle der Übertragungsfunktion (S(z)) des Schallerzeugers (20) eine geschätzte Übertragungsfunktion ($\hat{S}(z)$) zu verwenden, im Regler (92) abgelegt ist, um einen Schätzwert ($\tilde{u}(n)$) für das vom Schallerzeuger erzeugte Signal (u(n)) zu erhalten.

**8.** System nach einem der Ansprüche 1 bis 7, wobei der Signalerzeuger (91) weiter ausgebildet ist, einen Eingangswellenvektor (**x**(n)) zu erhalten, welcher von dem zu manipulierenden Schall abhängt, und das Schallsignal (y(n)) in Abhängigkeit von dem Eingangswellenvektor (**x**(n)) zu erzeugen.

**9.** System nach Anspruch 8, wobei der Eingangswellenvektor (**x**(n)) repräsentativ ist für wenigstens eines von:

Drehzahl oder Motorlast oder Drehmoment eines Motors (60), der den zu manipulierenden Schall erzeugt,
einer Gaspedalstellung oder einem Gaspedalgradienten, wobei das Gaspedal einen Motor (60) steuert, der den zu manipulierenden Schall erzeugt,
einem Zustand einer Kupplung oder eines Getriebes, welche mit einem Motor (60), der den zu manipulierenden Schall erzeugt, verbunden sind,
einem Betriebsmodus eines Motors (60), der den zu manipulierenden Schall erzeugt,
einer Spannung einer mit einem Motors (60), der den zu manipulierenden Schall erzeugt, verbundenen Batterie, und
einem Betriebszustand eines Motors (60), der den zu manipulierenden Schall erzeugt.

**10.** System nach Anspruch 8 oder 9,
weiter aufweisend ein Mikrofon (41), welches den zu manipulierenden Schall misst und ein diesem entsprechendes Messsignal (d(n)) ausgibt, wobei der Signalerzeuger (91) weiter ausgebildet ist, das Schallsignal (y(n)) unter Berücksichtigung des Messsignals (d(n)) zu erzeugen, welches durch das Mikrofon (41) ausgeben wird; und/oder
weiter aufweisend eine Benutzerschnittstelle (93), welche ausgebildet ist, eine Benutzereingabe zu empfangen, wobei der Signalerzeuger (91) weiter ausgebildet ist, das Schallsignal (y(n)) unter Berücksichtigung der Benutzereingabe zu erzeugen, welche über die Benutzerschnittstelle (93) empfangen wird; und/oder wobei der Signalerzeuger (91) mit einer Motorsteuerung (61) eines Motors verbindbar und ausgebildet ist, das Schallsignal (y(n)) unter Berücksichtigung von Signalen zu erzeugen, welche von der Motorsteuerung (61) empfangen werden.

**11.** Kraftfahrzeug aufweisend:

eine Verbrennungskraftmaschine (60) mit einer Motorsteuerung (61); und
ein System nach einem der Ansprüche 1 bis 10;
wobei die Motorsteuerung (61) mit wenigstens einem von dem Signalerzeuger (91) und dem Regler (92) verbunden und ausgebildet ist, wenigstens eines von einer Drehzahl, einer Motorlast und einem Drehmoment der Verbrennungskraftmaschine (60) zu ermitteln und als Eingangswellenvektor ($\mathbf{x}$(n)) an den Signalerzeuger (91) und/oder den Regler (92) auszugeben.

12. Verfahren zur aktiven Schallbeeinflussung, aufweisend die Schritte:

(S4) Erzeugen eines Schallsignals (y(n));
(S3) Messen eines überlagerten Schalls, der sich aus der Überlagerung von in Abhängigkeit vom Schallsignal (y(n)) erzeugtem Schall mit einem zu manipulierendem Schall ergibt, um ein entsprechendes Rückkoppelsignal (e'(n)) zu erhalten;
(S21) Erzeugen eines Grund-Regelsignals ($\lambda$(n)), wobei das Grund-Regelsignal ($\lambda$(n)) einen Wert einer Folge von rationalen Zahlen größer oder gleich null repräsentiert, wobei das Grund-Regelsignal ($\lambda$(n)) einem Quotienten eines vorgebbaren Werts ($\Delta$) mit einem Betrag der Amplituden eines von einem Schallerzeuger (20) erzeugten Signals ($\|u(n)\|$) entspricht, sofern der Betrag der Amplituden des vom Schallerzeuger (20) erzeugten Signals ($\|u(n)\|$) größer einem Schwellwert ($\varepsilon_1$) größer Null ist, und wobei das Grund-Regelsignal ($\lambda$(n)) einem vorgegebenen Maximalwert ($\Lambda_{MAX}$) entspricht, wenn der Betrag der Amplituden des vom Schallerzeuger (20) erzeugten Signals ($\|u(n)\|$) kleiner oder gleich dem Schwellwert ($\varepsilon_1$) ist;
(S23) Erzeugen eines ersten Regelsignals ($\lambda_1$(n)) aus der Differenz von Eins und dem Grund-Regelsignal ($\lambda$(n)) und eines zweiten Regelsignals ($\lambda_2$(n)) aus dem Produkt des Grund-Regelsignals ($\lambda$(n)) mit einem Signal (u(n-1)), welches zu einem früheren Zeitpunkt in Abhängigkeit vom Schallsignal (y(n)) erzeugtem Schall entspricht;
(S6) Gewichten des Schallsignals (y(n)) mit dem ersten Regelsignal ($\lambda_1$(n)) um ein gewichtetes Signal (y'(n)) zu erhalten;
(S5) Subtrahieren des zweiten Regelsignals ($\lambda_2$(n)) von dem Rückkoppelsignal (e'(n)), um ein modifiziertes Rückkoppelsignal (e(n)) zu erhalten, wobei im Schritt des Erzeugens des Schallsignals (y(n)) das Schallsignal (y(n)) unter Verwendung des modifizierten Rückkoppelsignals (e(n)) erzeugt wird; und
(S7) Verwenden des gewichteten Schallsignals (y'(n)) zur Erzeugung des in Abhängigkeit vom Schallsignal (y(n)) erzeugten Schalls.

**Claims**

1. System for actively influencing sound, having
a sound generator (20), which is configured to generate sound when an audio signal is sent to it and to superimpose this to a sound to be manipulated;
an error sensor (50), which measures superimposed sound, which is obtained from the superimposition of sound generated by the sound generator (20) to the sound to be manipulated and outputs a corresponding feedback signal (e'(n)); a signal generator (91), which generates and outputs a sound signal (y(n));
a controller (92), which generates a first control signal ($\lambda_1$(n)) and a second control signal ($\lambda_2$(n));
an adder (94), which subtracts the second control signal ($\lambda_2$(n)) from the feedback signal (e'(n)) and outputs the modified feedback signal (e(n)) thus obtained to the signal generator (91); and
a weighter (95), which weights the sound signal (y(n)) outputted by the signal generator (91) with the first control signal ($\lambda_1$(n)) generated by the controller (92) and outputs the sound signal (y'(n)) thus weighted to the sound generator (20) to generate the audio signal;
**characterized in, that**
the signal generator (91) is further configured to generate the sound signal (y(n)) as a function of the modified feedback signal (e(n)); and
the controller (92) is configured to generate the first and second control signals ($\lambda_1$(n), $\lambda_2$(n)) such that the value of the amplitudes of the feedback signal ($\|e'(n)\|$) corresponds to a predefinable value ($\Delta$) and thus corresponds to an intended sound pressure level of the superimposed sound, which is obtained from the superimposition of sound generated by the sound generator (20) to the sound to be manipulated.

2. System in accordance with claim 1,
wherein the controller (92) is configured to generate the first and second control signals ($\lambda_1$(n)), $\lambda_2$(n)) with the use of a basic control signal ($\lambda$(n)), wherein the basic control signal ($\lambda$(n)) represents a value from a sequence of rational numbers greater than or equal to zero,
wherein the basic control signal ($\lambda$(n)) corresponds to a quotient of the predefinable value ($\Delta$) to a value of the amplitudes of the signal ($\|u(n)\|$) generated by the sound generator (20) if the value of the amplitudes of the signal ($\|u(n)\|$) generated by the sound generator (20) is greater than a threshold value ($\varepsilon_1$) greater than zero, and
wherein the basic control signal ($\lambda$(n)) corresponds to a predefined maximum ($\Lambda_{MAX}$) if the value of the amplitudes of the signal ($\|u(n)\|$) generated by the sound generator (20) is lower than or equal to the threshold value ($\varepsilon_1$).

3. System in accordance with claim 2, wherein the controller (92) is configured to generate the first control signal ($\lambda_1(n)$) from the difference from one and the basic control signal ($\lambda(n)$).

4. System in accordance with one of the claims 2 or 3, wherein the controller (92) is configured to generate the second control signal ($\lambda_2(n)$) from the product of basic control signal ($\lambda(n)$) by a signal ($u(n-1)$) generated by the sound generator (20) at an earlier time.

5. System in accordance with claim 4, wherein the earlier times ($n-1$) of the signal ($u(n-1)$) generated by the sound generator precede the basic control signal ($\lambda(n)$) by one internal clock frequency or multiples of an internal clock frequency of the signal generator.

6. System in accordance with one of the claims 2 through 5, wherein the controller (92) is configured to determine the signal ($u(n)$) generated by the sound generator (20) by convoluting the transfer function ($S(z)$) of the sound generator (20) with the weighted sound signal ($y'(n)$) weighted by the weighter (95).

7. System in accordance with claim 6, wherein the controller (92) is configured to use an estimated transfer function ($\hat{S}(z)$), which is stored in the controller (92), instead of the transfer function ($S(z)$) of the sound generator (20), in order to obtain an estimate ($\tilde{u}(n)$) for the signal ($u(n)$) generated by the sound generator.

8. System in accordance with one of the claims 1 through 7, wherein the generator (91) is further configured to receive an input wave vector ($\mathbf{x}(n)$), which depends on the sound to be manipulated, and to generate the sound signal ($y(n)$) as a function of the input wave vector ($\mathbf{x}(n)$).

9. System in accordance with claim 8, wherein the input wave vector ($\mathbf{x}(n)$) is representative of at least one of the following:

speed of rotation or engine load or torque of an engine (60), which generates the sound to be manipulated,
an accelerator position or an accelerator gradient, wherein the accelerator controls an engine (60), which generates the sound to be manipulated,
a state of a clutch or a transmission, which are connected to an engine (60), which generates the sound to be manipulated,
a mode of operation of an engine (60), which generates the sound to be manipulated,
a voltage of a battery connected to an engine (60), which generates the sound to be manipulated, and
an operating state of an engine (60), which generates the sound to be manipulated.

10. System in accordance with claim 8 or 9,
further having a microphone (41), which measures the sound to be manipulated and outputs a measured signal ($d(n)$) corresponding to this, wherein the signal generator (91) is further configured to generate the sound signal ($y(n)$) by taking into account the measured signal ($d(n)$), which is outputted by the microphone (41); and/or
further having a user interface (93), which is configured to receive a user input, wherein the signal generator (91) is further configured to generate the sound signal ($y(n)$ by taking into account the user input, which is received via the user interface (93); and/or
wherein the signal generator (91) can be connected to an engine control (61) of an engine and is configured to generate the sound signal ($y(n)$) by taking into account signals that are received from the engine control (61).

11. Motor vehicle having
an internal combustion engine (60) with an engine control (61); and
a system in accordance with one of the claims 1 through 10;
wherein the control (61) is connected to at least one of the signal generator (91) and the controller (92) and is configured to determine the at least one of a speed of rotation, an engine load and a torque of the internal combustion engine (60) and to output same as an input wave vector ($\mathbf{x}(n)$) to the signal generator (91) and/or controller (92).

12. Method for actively influencing sound, having the steps of:

(S4) generating a sound signal ($y(n)$);
(S3) measuring a superimposed sound, which is obtained from the superimposition of sound generated as a function of the sound signal (y(n)) to a sound to be manipulated in order to obtain a corresponding feedback signal (e'(n));

(S21) generating a basic control signal ($\lambda$(n)), wherein the basic control signal ($\lambda$(n)) represents a value of a sequence of rational numbers greater than or equal to zero, wherein the basic control signal ($\lambda$(n)) corresponds to a quotient of a predefinable value ($\Delta$) to a value of the amplitudes of a signal ($\|u(n)\|$) generated by a sound generator (20), if the value of the signal ($\|u(n)\|$) generated by the sound generator (20) is greater than a threshold value ($\varepsilon_1$) greater than zero, and wherein the basic control signal ($\lambda$(n)) corresponds to a predefined maximum ($\Lambda_{MAX}$) if the value of the amplitudes of the signal ($\|u(n)\|$) generated by the sound generator (20) is lower than or equal to the threshold value ($\varepsilon_1$);

(S23) generating a first control signal ($\lambda_1$(n)) from the difference from one and the basic control signal ($\lambda$(n)) and a second control signal ($\lambda_2$(n)) from the product of the basic control signal ($\lambda$(n)) by a signal (u(n-1)), which corresponds to a sound generated at an earlier time as a function of the sound signal (y(n));

(S6) weighting the sound signal (y(n)) with the first control signal ($\lambda_1$(n)) to obtain a weighted signal (y'(n));

(S5) subtracting the second control signal ($\lambda_2$(n)) from the feedback signal (e'(n)) in order to obtain a modified feedback signal (e(n)), wherein the sound signal (y(n)) is generated in the step of generating the sound signal (y(n)) by using the modified feedback signal (e(n)); and

(S7) using the weighted sound signal (y'(n)) to generate the sound generated as a function of the sound signal (y(n)).

## Revendications

1. Système d'influence acoustique active, comprenant :

   un générateur acoustique (20), qui est conçu pour générer du son en cas d'injection d'un signal audio et pour superposer celui-ci à un son à manipuler,
   un capteur d'erreur (50), qui mesure le son superposé qui résulte de la superposition du son généré par le générateur acoustique (20) au son à manipuler, et délivre un signal de rétroaction (e'(n)) correspondant ;
   un générateur de signaux (91) qui génère et délivre un signal sonore (y(n)) ;
   un régulateur (92) qui génère un premier signal de régulation ($\lambda_1$(n)) et un second signal de régulation ($\lambda_2$(n)) ;
   un additionneur (94) qui soustrait le second signal de régulation ($\lambda_2$(n)) du signal de rétroaction (e'(n)) et qui délivre le signal de rétroaction (e(n)) modifié ainsi obtenu au générateur de signaux (91) ; et
   un pondérateur (95) qui, pour la génération du signal audio, pondère le signal sonore (y(n)) délivré par le générateur de signaux (91) avec le premier signal de régulation ($\lambda_1$(n)) généré par le régulateur (92) et délivre le signal sonore (y'(n)) ainsi pondéré au générateur acoustique (20) ;
   **caractérisé en ce que**
   le générateur de signaux (91) est en outre conçu pour générer le signal sonore (y(n)) en fonction du signal de rétroaction modifié (e(n)) ; et
   le régulateur (92) est conçu pour générer le premier et le second signal de régulation ($\lambda_1$(n), $\lambda_2$(n)) de sorte qu'une valeur absolue des amplitudes du signal de rétroaction ($\|e'(n)\|$) correspond à une valeur prédéfinissable ($\Delta$) et ainsi à un niveau de pression sonore souhaité du son superposé résultant de la superposition du son généré par le générateur acoustique (20) au son à manipuler.

2. Système selon la revendication 1,
   dans lequel le régulateur (92) est conçu pour générer le premier et le second signal de régulation ($\lambda_1$(n), $\lambda_2$(n)) à l'aide d'un signal de régulation de base ($\lambda$(n)), dans lequel le signal de régulation de base ($\lambda$(n)) représente une valeur d'une suite de nombres rationnels supérieurs ou égaux à zéro,
   dans lequel le signal de régulation de base ($\lambda$(n)) correspond à un quotient de la valeur prédéfinissable ($\Delta$) sur une valeur absolue des amplitudes du signal ($\|u(n)\|$) généré par le générateur acoustique (20) dans la mesure où la valeur absolue des amplitudes du signal ($\|u(n)\|$) généré par le générateur acoustique (20) est supérieure à une valeur de seuil ($\varepsilon 1$) supérieure à zéro, et dans lequel le signal de régulation de base ($\lambda$(n)) correspond à une valeur maximale prédéfinie ($\Lambda_{MAX}$) lorsque la valeur absolue des amplitudes du signal ($\|u(n)\|$) généré par le générateur acoustique (20) est inférieure ou égale à la valeur de seuil ($\varepsilon_1$).

3. Système selon la revendication 2, dans lequel le régulateur (92) est conçu pour générer le premier signal de régulation ($\lambda_1$(n)) à partir de la différence de 1 et du signal de régulation de base ($\lambda$(n)).

4. Système selon l'une des revendications 2 ou 3, dans lequel le régulateur (92) est conçu pour générer le second

signal de régulation ($\lambda_2$(n)) à partir du produit du signal de régulation de base ($\lambda$(n)) avec un signal (u(n-1)) généré par le générateur acoustique (20) à un instant antérieur.

5. Système selon la revendication 4, dans lequel les instants antérieurs (n-1) du signal (u(n-1)) généré par le générateur acoustique sont situés en arrière par rapport au signal de régulation de base ($\lambda$(n)) d'une fois ou de plusieurs fois une fréquence d'horloge interne du générateur de signaux.

6. Système selon l'une des revendications 2 à 5, dans lequel le régulateur (92) est conçu pour déterminer le signal (u(n)) généré par le générateur acoustique (20) par convolution de la fonction de transfert (S(z)) du générateur acoustique (20) avec le signal sonore (y'(n)) pondéré délivré par le pondérateur (95).

7. Système selon la revendication 6, dans lequel le régulateur (92) est conçu pour employer, à la place de la fonction de transfert (S(z)) du générateur acoustique (20), une fonction de transfert estimée ($\hat{S}$(z)), qui est déposée dans le régulateur (92), pour obtenir une valeur estimée ($\tilde{u}$(n)) pour le signal (u(n)) généré par le générateur acoustique.

8. Système selon l'une des revendications 1 à 7, dans lequel le générateur de signaux (91) est en outre conçu pour obtenir un vecteur d'onde d'entrée (x(n)) qui dépend du son à manipuler et pour générer le signal sonore (y(n)) en fonction du vecteur d'onde d'entrée (x(n)).

9. Système selon la revendication 8, dans lequel le vecteur d'onde d'entrée (x(n)) est représentatif d'au moins un de :

une vitesse de rotation ou une charge de moteur ou un couple d'un moteur (60) qui génère le son à manipuler,
une position de la pédale d'accélération ou un gradient de la pédale d'accélération, dans lequel la pédale d'accélération commande un moteur (60) qui génère le son à manipuler,
un état d'un embrayage ou d'une boîte de vitesse qui sont reliés à un moteur (60) qui génère le son à manipuler,
un mode de fonctionnement d'un moteur (60) qui génère le son à manipuler, une tension d'une batterie reliée à un moteur (60) qui génère le son à manipuler, et
un état de fonctionnement d'un moteur (60) qui génère le son à manipuler.

10. Système selon la revendication 8 ou 9,
comprenant en outre un microphone (41) qui mesure le son à manipuler et délivre un signal de mesure (d(n)) correspondant à celui-ci, dans lequel le générateur de signaux (91) est conçu en outre pour générer le signal sonore (y(n)) en tenant compte du signal de mesure (d(n)) qui est délivré par le microphone (41) ; et/ou
comprenant en outre une interface utilisateur (93) qui est conçue pour recevoir une entrée d'utilisateur, dans lequel le générateur de signaux (91) est conçu en outre pour générer le signal sonore (y(n)) en tenant compte de l'entrée d'utilisateur qui est reçue par l'interface utilisateur (93) ; et/ou dans lequel le générateur de signaux (91) peut être relié à une commande de moteur (61) d'un moteur et est conçu pour générer le signal sonore (y(n)) en tenant compte de signaux qui sont reçus par la commande de moteur (61).

11. Véhicule automobile comprenant :

un moteur à combustion interne (60) avec une commande de moteur (61) ; et
un système selon l'une des revendications 1 à 10 ;
dans lequel la commande de moteur (61) est reliée au moins à un du générateur de signaux (91) et du régulateur (92) et est conçue pour déterminer au moins un parmi une vitesse de rotation, une charge de moteur et un couple du moteur à combustion interne (60) et à le délivrer en tant que vecteur d'onde d'entrée (x(n)) au générateur de signaux (91) et/ou au régulateur (92).

12. Procédé d'influence sonore active, comprenant les étapes de :

(S4) génération d'un signal sonore (y(n)) ;
(S3) mesure d'un son superposé qui résulte de la superposition d'un son généré en fonction du signal sonore (y(n)) à un son à manipuler pour obtenir un signal de rétroaction (e'(n)) correspondant ;
(S21) génération d'un signal de régulation de base ($\lambda$(n)), dans lequel le signal de régulation de base ($\lambda$(n)) représente une valeur d'une suite de nombres rationnels supérieurs ou égaux à zéro, dans lequel le signal de régulation de base ($\lambda$(n)) correspond à un quotient d'une valeur prédéfinissable ($\Delta$) avec une valeur absolue des amplitudes d'un signal ($\|$u(n)$\|$) généré par un générateur acoustique (20) dans la mesure où la valeur absolue des amplitudes du signal ($\|$u(n)$\|$) généré par le générateur acoustique (20) est supérieure à une valeur

de seuil ($\varepsilon_1$) supérieure à zéro, et dans lequel le signal de régulation de base ($\lambda(n)$) correspond à une valeur maximale prédéfinie ($\Lambda$MAX) lorsque la valeur absolue des amplitudes du signal ($\|u(n)\|$) généré par le générateur acoustique (20) est inférieure ou égale à la valeur de seuil ($\varepsilon_1$) ;

(S23) génération d'un premier signal de régulation ($\lambda_1(n)$) à partir de la différence de 1 et du signal de régulation de base ($\lambda(n)$) et d'un second signal de régulation ($\lambda_2(n)$) à partir du produit du signal de régulation de base ($\lambda(n)$) avec un signal (u(n-1)) qui correspond au son généré à un instant antérieur en fonction du signal sonore (y(n)) ;

(S6) pondération du signal sonore (y(n)) avec le premier signal de régulation ($\lambda_1(n)$) pour obtenir un signal pondéré (y'(n)) ;

(S5) soustraction du second signal de régulation ($\lambda_2(n)$) du signal de rétroaction (e'(n)) pour obtenir un signal de rétroaction modifié (e(n)), dans lequel, à l'étape de génération du signal sonore (y(n)), le signal sonore (y(n)) est généré à l'aide du signal de rétroaction modifié (e(n)) ; et

(S7) emploi du signal sonore pondéré (y'(n)) pour la génération du son généré en fonction du signal sonore (y(n)).

**Fig. 1**

**Fig. 2**

**Fig. 3**

**Fig. 4A**

**Fig. 4B**

EP 3 245 651 B1

Fig. 5

Fig. 6

28

BEGINN

S1

Setzen von Startbedingungen:
$\tilde{u}(n-1) = 0$; $\|\tilde{u}(n-1)\| = 0$; $\varepsilon_1 = 0{,}0001$; $\Lambda_{MAX} = 60$

S2

Erhalten eines vorgegebenen Werts $\Delta$

Messen eines überlagerten Schalls, um ein entsprechendes Rückkoppelsignal e'(n) zu erhalten
S3

Erzeugen eines Schallsignals y(n) unter Verwendung eines manipulierten Rückkoppel-signals e(n)   S4

S20

$\|\tilde{u}(n-1)\| > \varepsilon_1$   NEIN

JA

Berechnen von $\tilde{u}(n-1)$ und $\|\tilde{u}(n-1)\|$:
$\tilde{u}(n-1) = TF_{AMP}\{w_1(n) \sin(\omega_0 n - TF_{PHASE})$
$+ w_2(n) \cos(\omega_0 n - TF_{PHASE})\}$;
$\|\tilde{u}(n-1)\| = \sqrt{w_1(n)^2 + w_2(n)^2}$
$\cdot TF_{AMP}(\varpi_0)$
S20'

S21

$\lambda(n) = \dfrac{\Delta}{\|\tilde{u}(n-1)\|}$

$\lambda(n) = \Lambda_{MAX}$
S22

S23

$\lambda_1(n) = 1 - \lambda(n)$
$\lambda_2(n) = \lambda(n) \cdot \tilde{u}(n-1)$

S5

Erhalten eines modifizierten Rückkoppelsignals e(n):
$e(n) = e'(n) - \lambda_2(n)$

Gewichten des Schallsignals y(n) mit dem ersten Regelsignal $\lambda_1(n)$ um ein gewichtetes Schallsignal y'(n) zu erhalten:
$y'(n) = \lambda_1(n) \cdot y(n)$  S6

S7

Ausgeben des gewichteten Schallsignals y'(n) zur Erzeugung eines einem gewichteten Audiosignal u'(n) entsprechenden Schalls mittels eines Schallerzeugers und Überlagern des vom Schallerzeuger erzeugten Schalls mit zu manipulierendem Schall

**Fig. 8**

**Fig. 7**

**Fig. 9A**

**Fig. 9B**

Fig. 10

Schalldruckpegel
[dB(A)]

130

110

80

1500    2000    2500    3000    3500

ANC AN
—·— ANC Stand der Technik
—— ANC AUS

Drehzahl
[1/min]

## Fig. 11A

Schalldruckpegel
[dB(A)]

130

120

110

100

80

1500    2000    2500    3000    3500

ANC AN
—·— ANC Stand der Technik
—— ANC AUS

Drehzahl
[1/min]

## Fig. 11B

Schalldruckpegel
[dB(A)]

36

32

28

24

20

----- ANC AN

——— ANC AUS

– – Druckpegel Aktor

1          2          3          4    Zeit [Sek.]

**Fig. 12A**

Schalldruckpegel
[dB(A)]

36

32

28

24

20

----- ANC AN

——— ANC AUS

– – Druckpegel Aktor

1          2          3          4    Zeit [Sek.]

**Fig. 12B**

Schalldruckpegel
[dB(A)]

36

32

28

24

20

----- ANC AN

——— ANC AUS

– – Druckpegel Aktor

1          2          3          4    Zeit [Sek.]

**Fig. 12C**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **SEN M. KUO ; DENNIS R. MORGAN.** Active Noise Control: A tutorial review. *Proceedings of the IEEE,* Juni 1999, vol. 87 (6